# EUROPÄISCHE PATENTANMELDUNG

(11) **EP 0 568 119 A2**
(43) Veröffentlichungstag der Anmeldung: **03.11.1993**
(21) Anmeldenummer: 93111515.8
(22) Anmeldetag: 13.11.1991
(51) Int. Cl.: B23D 31/00, B23D 33/10, B23Q 3/18

(54) **Bearbeitungsverfahren und -anlage für ein Lagerauge aufweisende Maschinenteile**

(30) Priorität: 14.11.1990 DE 4036213; 24.11.1990 DE 4037429
(62) Teilanmeldung aus: 91119317.5
(71) Anmelder: Ex-Cell-O GmbH, D-73054 Eislingen (DE)
(72) Erfinder: Henzler, Peter, D-73035 Göppingen (DE); Tengler, Armin, D-73035 Göppingen (DE)
(74) Vertreter: Hoeger, Stellrecht & Partner

(57) **Zusammenfassung**

Um ein Bearbeitungsverfahren, umfassend ein Verfahren zum Transport eines in eine erste und eine zweite Lagerschale (102,104) bruchgetrennten und anschließend gefügten Maschinenteils als Ganzes, insbesondere eines Pleuels derart zu schaffen, ein bruchgetrenntes und anschließend gefügtes Maschinenteil im Rahmen des erfindungsgemäßen Bearbeitungsverfahrens weiterzutransportieren, wird vorgeschlagen, daß das Maschinenteil von einem Greifer (32 bis 40) gegriffen wird und das von dem Greifer (32 bis 40) beim Greifen die erste Lagerschale (102) gegen die zweite Lagerschale (104) gedrückt wird.

## Beschreibung

Die Erfindung betrifft ein Bearbeitungsverfahren umfassend ein Verfahren zum Transport eines in eine erste und zweite Lagerschale bruchgetrennten und anschließend gefügten Maschinenteils als ganzes, insbesondere eines Pleuels.

Ein derartiger Transport wurde im Zusammenhang mit den bislang bekannten Verfahren noch nicht beschrieben.

Der Erfindung liegt daher die Aufgabe zugrunde, eine einfache Möglichkeit zu schaffen, ein bruchgetrenntes und anschließend gefügtes Maschinenteil im Rahmen des erfindungsgemäßen Bearbeitungsverfahrens weiterzutransportieren.

Diese Aufgabe wird bei einem Verfahren der vorstehend genannten Art erfindungsgemäß dadurch gelöst, daß das Maschinenteil von einem Greifer gegriffen wird und daß von dem Greifer beim Greifen die erste gegen die zweite Lagerschale gedrückt wird.

Damit ist das erfindungsgemäße Verfahren in der Lage, ein bruchgetrenntes, aus zwei Lagerschalen bestehendes Maschinenteil ohne weitere Maßnahmen in die Bearbeitungsstation zu transportieren.

Besonders vorteilhaft ist es in dem Fall, in dem das Maschinenteil ein Pleuel ist, wenn von dem Greifer in das Kolbenbolzenlagerauge gegriffen wird.

Das Kolbenbolzenlagerauge stellt im Falle eines Pleuels zusammen mit dem großen Lagerauge den einzigen Bereich dar, in welchem relativ zum großen Lagerauge definierte Abmessungen eingehalten sind, da die gesamten Außenabmessungen des Pleuels produktionsabhängig variieren, während die Abmessungen des Kolbenbolzenlagerauges und des großen Lagerauges und auch deren relative Anordnung aufgrund der nachfolgenden Bearbeitung der Pleuel stets in engen Toleranzgrenzen bleiben.

Besonders vorteilhaft ist es daher im Rahmen des vorstehend beschriebenen erfindungsgemäßen Verfahrens, wenn von dem Greifer die erste Lagerschale gegen die fest mit dem Kolbenbolzenlagerauge verbundene zweite Lagerschale gepreßt wird.

Dabei kann der Greifer in unterschiedlichster Art und Weise auf die erste Lagerschale drücken. Besonders zweckmäßig ist es, insbesondere um das Pleuel symmetrisch zu halten und keine Querkräfte auftreten zu lassen, die ein Herausfallen des Pleuels aus dem Greifer bedingen könnten, wenn von dem Greifer ungefähr mittig auf die erste Lagerschale gedrückt wird.

Insbesondere dann, wenn das Pleuel in den einzelnen Bearbeitungsstationen wieder gehalten und fixiert werden muß, ist es besonders vorteilhaft, wenn das Pleuel von dem Greifer ausschließlich zum Eingreifen in das Kolbenbolzenlagerauge und Drücken gegen die erste Lagerschale in einer definierten Stellung gehalten und transportiert wird.

Ergänzend zu dem vorstehenden Bearbeitungsverfahren betrifft die Erfindung eine Bearbeitungsanlage umfassend einen Greifer für das ein Lagerauge aufweisende Maschinenteil, welches durch Bruchtrennen in eine erste und eine zweite Lagerschale geteilt ist und bei welchem die erste und die zweite Lagerschale gefügt sind.

Die Aufgabe, dieses Maschinenteil sicher und zuverlässig transportieren zu können, wird erfindungsgemäß dadurch gelöst, daß der Greifer beim Greifen des Maschinenteils die erste Lagerschale gegen die zweite Lagerschale gedrückt hält.

Für den Fall, daß es sich bei dem Maschinenteil um ein Pleuel mit einem Kolbenbolzenlagerauge handelt, ist zweckmäßigerweise der Greifer so aufgebaut, daß er einen Führungsdorn zum Eingriff in das Kolbenbolzenlagerauge aufweist. Damit ist der Greifer in der Lage, das Pleuel mit seinem großen Lagerauge definiert zu positionieren, da das Kolbenbolzenlagerauge und das große Lagerauge in definierter Lage relativ zueinander angeordnet sind, während beispielsweise eine Außenkontur des Pleuels hinsichtlich ihrer Abmessungen in erheblichem Maße von Pleuel zu Pleuel variiert.

Insbesondere zur definierten Positionierung des Pleuels ist es besonders vorteilhaft, wenn der Führungsdorn einen in das Kolbenbolzenlagerauge einführbaren Passzylinder aufweist.

Um dabei das Pleuel beispielsweise auch in einer Haltestation definiert fixieren zu können ist vorteilhafterweise vorgesehen, daß der Führungsdorn das Kolbenbolzenlagerauge nur teilweise durchgreift. Besonders zweckmäßig ist es, wenn der Führungsdorn das Kolbenbolzenlagerauge maximal bis zur Hälfte durchgreift.

Zur Sicherung des Greifens des Pleuels in dem Kolbenbolzenlagerauge ist außerdem noch günstigerweise vorgesehen, daß der Greifer einen Sicherungsfinger mit einer das auf dem Führungsdorn sitzende Kolbenbolzenlagerauge sichernden Sicherungsnase aufweist.

Darüber hinaus ist ein erfindungsgemäßer Greifer für ein Pleuel mit einer fest mit dem Kolbenbolzenlagerauge verbundenen zweiten Lagerschale vorteilhafterweise so ausgebildet, daß der Greifer einen beweglichen Greiffinger zum Beaufschlagen der ersten Lagerschale in Richtung des Führungsdorns aufweist. Dadurch wird die erste Lagerschale gegen die zweite Lagerschale gedrückt und der Führungsdorn dient als Gegenlager, so daß das Pleuel mit seinem großen Lagerauge einerseits in einer definierten Position gehalten werden kann und andererseits während des Greifens die erste und zweite Lagerschale in ihrem gefügten Zustand bleiben und dieser gefügte Zustand auch beim Transport aufrecht erhalten wird.

Vorzugsweise ist der Greiffinger dabei so ausgebildet, daß er ein Halteprisma zum Beaufschlagen der ersten Lagerschale aufweist.

Vorzugsweise ist dabei das Halteprisma in Richtung quer zu einer Führungsdornachse prismatisch ausgebildet.

Ergänzend dazu ist es außerdem noch von Vorteil, wenn das Halteprisma parallel zur Führungsdornachse prismatisch ist.

Ein besonders bevorzugtes Ausführungsbeispiel sieht vor, daß das Halteprisma einen Mittenbogen der ersten Lagerschale beaufschlagt.

Um zusätzlich insbesondere zum Positionieren des Pleuels in bestimmten Bearbeitungsstationen noch die Möglichkeit zu schaffen, das Pleuel in diesem festzuhalten, ist vorgesehen, daß der Greifer einen Ausstoßer aufweist.

Die Erfindung betrifft ferner eine Bearbeitungsanlage umfassend eine Haltestation für ein durch Bruchtrennen in eine erste Lagerschale und in eine zweite Lagerschale unterteiltes Maschinenteil, wobei die erste und die zweite Lagerschale gefügt aufeinander sitzen.

Bei einer derartigen Haltestation besteht das Problem, das Maschinenteil für eine Bearbeitung exakt zu fixieren.

Diese Aufgabe wird erfindungsgemäß bei einer Haltestation der vorstehend genannten Art dadurch gelöst, daß die Haltestation eine in das Lagerauge greifende Zentrierung aufweist.

Die Zentrierung ist vorzugsweise so ausgebildet, daß sie beide Lagerschalen fixiert.

Insbesondere bei einem als Pleuel ausgebildeten Maschinenteil, bei welchem eine Lagerschale fest mit einem Kolbenbolzenlagerauge verbunden ist, ist es besonders vorteilhaft, wenn die Haltestation einen in das Kolbenbolzenlagerauge eingreifenden Fixierdorn aufweist, da dadurch insbesondere in Verbindung mit der Zentrierung das große Lagerauge in einer definierten Lage fixierbar ist.

Um außerdem eine definierte Anordnung des Maschinenteils in dieser Haltestation zu gewährleisten, ist vorzugsweise vorgesehen, daß die Haltestation eine sich quer zur Einsetzrichtung erstreckende rückwärtige Anschlagfläche für eine der Lagerschalen aufweist.

Günstigerweise ist dabei die Haltestation so ausgebildet, daß sie bewegliche Haltebacken aufweist, mit welchen die an der rückwärtigen Anschlagfläche anliegende Lagerschale gegen diese beaufschlagbar ist.

Vorzugsweise ist bei einem besonders bevorzugten Ausführungsbeispiel vorgesehen, daß die nicht gegen die rückwärtige Anschlagfläche beaufschlagt angelegte Lagerschale mit geringem Spiel gegen eine Bewegung in Einsetzrichtung und entgegengesetzt dazu geführt ist. Dies schafft die Möglichkeit, beispielsweise in dieser Haltestation die beiden Lagerschalen zu lösen, so daß die Bruchflächen nicht mehr druckbeaufschlagt sind, und beispielsweise die Bruchflächen noch zusätzlich voneinander abzuheben sowie erneut zu fügen, so daß dadurch die Möglichkeit besteht, daß sich Bruchflächen nochmals erneut passend ineinander finden.

Die Erfindung betrifft ferner ein Bearbeitungsverfahren für ein ein Lagerauge aufweisendes Maschinenteil, bei welchem das Lagerauge in einer Bruchtrennstation in eine erste und eine zweite Lagerschale unterteilt wird.

Der Erfindung liegt die Aufgabe zugrunde, das bekannte Bearbeitungsverfahren derart zu verbessern, daß in einfacher Weise und vor allem kostengünstig eine Weiterbearbeitung eines in einer Bruchtrennstation in eine erste und zweite Lagerschale unterteilten Maschinenteils möglich ist.

Diese Aufgabe wird bei einem Bearbeitungsverfahren der eingangs genannten Art erfindungsgemäß dadurch gelöst, daß das Maschinenteil von der Bruchtrennstation in auf die Bruchtrennstation folgende Weiterbearbeitungsstationen transportiert wird und daß die Bruchtrennstationen und die Weiterbearbeitungsstationen in einer Taktrichtung in gleichen Abständen voneinander angeordnet sind.

Der Vorteil dieser Lösung ist darin zu sehen, daß sich die Bruchtrennstation und die Weiterbearbeitungsstationen in einfacher Weise miteinander so verbinden lassen, daß die Weiterbearbeitung des Maschinenteils in einfacher Weise ökonomisch möglich ist.

Besonders zweckmäßig läßt sich dies dann realisieren, wenn die Maschinenteile von Greifern transportiert werden, welche hierzu in Taktrichtung und senkrecht zur Taktrichtung auf die Stationen zubewegt werden.

Besondere Vorteile bietet ein derartiges Bearbeitungsverfahren dann, wenn die Maschinenteile von einer Vielzahl von Greifern in den einzelnen Stationen gleichzeitig gegriffen, gleichzeitig aus diesen Stationen entnommen, gleichzeitig weitertransportiert und gleichzeitig in die nächstfolgende Station eingesetzt werden.

Hinsichtlich der einzelnen Bearbeitungsschritte in den Weiterbearbeitungsstationen ist es vorteilhaft, wenn in einer Weiterbearbeitungsstation die bruchgetrennten Maschinenteile verschraubt werden.

Alternativ oder ergänzend dazu ist es vorteilhaft, wenn in einer Weiterbearbeitungsstation die bruchgetrennten Maschinenteile geöffnet, gereinigt und wiederverschraubt werden.

Alternativ und ergänzend ist es ferner zweckmäßig wenn in einer Weiterbearbeitungsstation die bruchgetrennten Maschinenteile vermessen werden.

Eine besonders vorteilhafte vorgehensweise sieht vor, daß in einer Weiterbearbeitungsstation die eingedrehten Schrauben erneut gelöst werden, die Bruchflächen durch Ausblasen gereinigt werden und die Schrauben wieder eingedreht werden.

Darüber hinaus betrifft die Erfindung ferner noch eine Bearbeitungsanlage für ein ein Lagerauge aufweisendes Maschinenteil, umfassend eine das Lagerauge in eine erste und eine zweite Lagerschale teilende Bruchtrennstation.

Um bei einer derartigen Bearbeitungsanlage ebenfalls in einfacher und ökonomischer Weise Weiterbearbeitungen des Maschinenteils vornehmen zu können, ist erfindungsgemäß vorgesehen, daß die Bearbeitungsanlage auf die Bruchtrennstation folgende Weiterbearbeitungsstationen umfasst und daß das Maschinenteil von der Bruchtrennstation zu den Weiterbearbeitungsstationen mittels eines Greifers transportierbar ist.

Als besonders zweckmäßig hat es sich dabei erwiesen, wenn die Weiterbearbeitungsstation in einer Taktrichtung in gleichen Abständen voneinander angeordnet sind, so daß ein einfacher Zugriff auf die Bearbeitungsstationen möglich ist.

Eine zweckmäßige Variante sieht dabei vor, daß der Greifer in einer Taktrichtung von einer Station zu anderen und senkrecht zur Taktrichtung auf die jeweilige Station zu bewegbar ist.

Noch ökonomischer arbeitet die erfindungsgemäße Bearbeitungsanlage dann, wenn eine Vielzahl von Greifern auf einem Greiferträger angeordnet ist. Diese auf einem Greiferträger angeordneten Greifer lassen sich insbesondere dann zweckmäßig einsetzen, wenn der Greiferträger senkrecht zur Taktrichtung oder in Taktrichtung bewegbar ist, so daß die Maschinenteile in den einzelnen Stationen gleichzeitig greifbar, gleichzeitig aus diesen Stationen entnehmbar, gleichzeitig in Taktrichtung weitertransportierbar und gleichzeitig wieder in die nächstfolgende Station einsetzbar sind.

Eine weitere zweckmäßige Weiterbildung einer derartigen Bearbeitungsanlage sieht dabei vor, daß diese eine Haltestation aufweist, welche bereits vorstehend im Zusammenhang mit der vorliegenden Erfindung beschrieben wurde.

Das Verfahren zum Bruchtrennen eines ein Lagerauge aufweisenden Maschinenteils, insbesondere eines Pleuels, in eine erste und eine zweite Lagerschale, ist beispielsweise derart konzipiert, daß das Maschinenteil mit dem Lagerauge auf einen aus zwei Hälften gebildeten Dorn aufgesteckt wird und die Hälften zum Bruchtrennen des Maschinenteils auseinanderbewegt werden und daß vor und während des Bruchtrennens die erste Lagerschale in Trennrichtung durch mindestens ein erstes Querfixierelement festgelegt wird, die erste Lagerschale quer zur Trennrichtung durch zwei erste Seitenfixierelemente festgelegt wird, die zweite Lagerschale quer zur Trennrichtung durch zwei zweite Seitenfixierelemente festgelegt wird und die zweite Lagerschale in Trennrichtung durch mindestens ein zweites Querfixierelement festgelegt wird, wobei alle Fixierelemente zum Aufstecken des Maschinenteils auf den Dorn in einer Aufsteckstellung gehalten und nach dem Aufstecken des Maschinenteils in ihre Fixierstellung bewegt werden.

Die vorstehenden Verfahrensschritte sind beispielsweise aus dem deutschen Gebrauchsmuster G 89 05 863.1 bekannt.

Bei diesem Verfahren sind die Quer- und Seitenfixierelemente Schrauben, die vor dem Bruchtrennen auf das Werkstück zugestellt werden und mit welchen das Werkstück in seiner Lage vor dem Bruchtrennen durch Kraftbeaufschlagung fixiert wird.

Der Nachteil dieser bekannten Lösung ist darin zu sehen, daß die Seitenfixierelemente dadurch einen Zwang auf das Maschinenteil im Bereich eines Lagerauges ausüben, und die entstehenden ersten und zweiten Lagerschalen unter Zwangskräften stehen, so daß vor einem Fügen zunächst die auf die Lagerschalen wirkenden Zwangskräfte durch Lösen der Fixierelemente von den Lagerschalen genommen werden müssen.

Der Erfindung liegt daher ergänzend die Aufgabe zugrunde, ein Verfahren der gattungsgemäßen Art derart zu verbessern, daß das Fügen nach dem Bruchtrennen in möglichst einfacher Art und Weise möglich ist.

Diese Aufgabe wird bei einem Verfahren der eingangs beschriebenen Art erfindungsgemäß dadurch gelöst, daß die ersten und die zweiten Seitenfixierelemente vor dem Bruchtrennen an dem Maschinenteil in Zustellrichtung im wesentlichen spannungsfrei angelegt und in dieser in Zustellrichtung im wesentlichen spannungsfrei anliegenden Stellung gegen eine weitere Bewegung entgegengesetzt zur Zustellrichtung während des Bruchtrennens festgehalten werden und insbesondere während des Bruchtrennens entstehende Deformationen des Maschinenteils in Zustellrichtung nicht fixieren, sondern deren Rückbildung erlauben.

Der Vorteil der Erfindung ist darin zu sehen, daß durch das Anlegen der ersten und zweiten Seitenfixierelemente vor dem Bruchtrennen in Zustellrichtung im wesentlichen spannungsfrei anliegen, das heißt, daß die Seitenfixierelemente nach ihrem Anlegen in Zustellrichtung im wesentlichen nicht zusätzlich mit einer Kraft auf das Maschinenteil in einem Bereich des Lagerauges einwirken und auch nicht einer Deformation im Bereich des Lagerauges durch eine weitere Bewegung in Zustellrichtung folgen und diese aufrechterhalten, sondern lediglich das Maschinenteil während des Bruchtrennens in ausreichendem Maße fixiert halten, so daß Deformationen beim Entstehen der ersten und zweiten Lagerschalen während des Bruchtrennens nicht aufrecht erhalten werden, - wie dies bei mit einer Kraft in Zustellrichtung einwirkenden Seitenfixierelementen der Fall wäre - sondern sich nach dem Bruchtrennen zurückbilden können. Somit sind nach dem Bruchtrennen die erste und zweite Lagerschale in einer Stellung relativ zueinander fixiert und ausgerichtet, die ein problemloses Fügen von beim Bruchtrennen auftretenden Bruchflächen zwischen den beiden Lagerschalen erlaubt.

Bei dem bislang beschriebenen Ausführungsbeispiel der erfindungsgemäßen Lösung wurde nichts darüber ausgesagt, wie die Querfixierelemente vor und während des Bruchtrennens an dem Maschinenteil im Bereich des Lagerauges angelegt gehalten sind. Wie bereits erwähnt, ist zunächst das erfindungsgemäße Anlegen der ersten und zweiten Seitenfixierelemente wesentlich, und die Querfixierelemente könnten an das Maschinenteil in herkömmlicher Weise mit Spannung in Zustellrichtung angelegt werden. Noch vorteilhafter ist es jedoch, wenn die ersten und die zweiten Querfixierelemente vor und während des Bruchtrennens an dem Maschinenteil in Zustellrichtung im wesentlichen spannungsfrei angelegt werden und während des Bruchtrennens in dieser angelegten Stellung gegen eine weitere Bewegung entgegengesetzt Zustellrichtung festgehalten werden. Damit wird auch durch die Querfixierelemente jeder Zwang auf die sich bildenden Lagerschalen, in gleicher Weise wie vorstehend im Zusammenhang mit den Seitenfixierelementen beschrieben, vermieden.

Durch die erfindungsgemäße Lösung läßt sich in besonders einfacher Weise ein Fügen der entstehenden Lagerschalen dadurch erreichen, daß nach dem Bruchtrennen die Hälften des Dorns zum Fügen der ersten und zweiten Lagerschalen zusammenbewegt werden und daß zum Fügen das erste Querfixierelement von seiner Fixierstellung in Richtung seiner Aufsteckstellung vom Maschinenteil wegbewegt wird, während zumindest die ersten Seitenfixierelemente an dem Maschinenteil weiter in ihrer vor und während des Bruchtrennens an dem Maschinenteil im wesentlichen spannungsfrei in Zustellrichtung anliegenden Stellung gehalten werden. Hierdurch wird in besonders einfacher Weise ein Fügen erreicht, nämlich unter Ausnutzung der Tatsache, daß die Seitenfixierelemente keinen Zwang auf die beiden Lagerschalen ausüben und durch das Wegbewegen des ersten Querfixierelements von dem Maschinenteil wird für die erste Lagerschale ein Spielraum geschaffen, um nach dem Fügen der Bruchflächen zwischen der ersten Lagerschale der weiteren Bewegung der zweiten Lagerschale auszuweichen, so daß am Ende des Fügens die beiden Lagerschalen gefügt und ohne Spannung aufeinander sitzen.

Um zum Fügen die zweite Lagerschale in der fixierten Stellung zu halten ist vorzugsweise vorgesehen, daß das zweite Querfixierelement zum Fügen an dem Maschinenteil weiter in seiner vor und während des Bruchtrennens am Maschinenteil im wesentlichen spannungsfrei anliegenden Stellung gehalten wird. Dadurch wird das Fügen der zweiten Lagerschale mit der ersten Lagerschale weiter vereinfacht, da die zweite Lagerschale in einer definierten Stellung gehalten wird.

Alternativ oder ergänzend dazu ist es vorteilhaft, wenn die zweiten Seitenfixierelemente zum Fügen an dem Maschinenteil in ihrer vor und während des Bruchtrennens an dem Maschinenteil im wesentlichen spannungsfrei in Zustellrichtung anliegenden Stellung gehalten werden. Dadurch wird insbesondere die Ausrichtung der zweiten Lagerschale relativ zu der ersten Lagerschale in optimaler Weise aufrecht erhalten, so daß die Bruchflächen passend ineinander finden.

Um das Maschinenteil mit den beiden Lagerschalen nach dem Bruchtrennen bei dem erfindungsgemäßen Bearbeitungsverfahren weiterzutransportieren ist vorteilhafterweise vorgesehen, daß das Maschinenteil in seiner gefügten Stellung von einem Greifer gegriffen und weitertransportiert wird.

Desweiteren betrifft die Erfindung eine Bearbeitungsanlage für ein Lagerauge aufweisende Maschinenteile, umfassend eine Vorrichtung zum Bruchtrennen des das Lagerauge aufweisenden Maschinenteils, insbesondere eines Pleuels, in eine erste und zweite Lagerschale, mit einem aus zwei Hälften gebildeten Dorn, auf welchen das Maschinenteil mit dem Lagerauge aufsteckbar ist und dessen Hälften zum Bruchtrennen des Maschinenteils auseinanderbewegbar sind, mit einem ersten Querfixierelement zum Festlegen der ersten Lagerschale in Trennrichtung, zwei ersten Seitenfixierelementen zum Festlegen der ersten Lagerschale quer zur Trennrichtung, zwei zweiten Seitenfixierelementen zum Festlegen der zweiten Lagerschale quer zur Trennrichtung und mindestens einem zweiten Querfixierelement zum Festlegen der zweiten Lagerschale in Trennrichtung, wobei alle Fixierelemente bei auf den Dorn aufgestecktem Maschinenteil auf dieses zur Fixierung zustellbar sind.

Eine derartige Vorrichtung ist ebenfalls, wie bereits eingangs beschrieben, bekannt.

Die bereits eingangs erwähnte Aufgabe wird bei einer Bearbeitungsanlage der vorstehend beschriebenen Art erfindungsgemäß dadurch gelöst, daß die ersten und zweiten Seitenfixierelemente vor dem Bruchtrennen an das Maschinenteil durch Verschieben derselben in Zustellrichtung im wesentlichen spannungsfrei in Zustellrichtung anlegbar und in dieser in Zustellrichtung im wesentlichen spannungsfrei anliegenden Stellung gegen eine weitere Bewegung entgegengesetzt zur Zustellrichtung festlegbar sind.

Damit werden die bereits im Zusammenhang mit dem erfindungsgemäßen Verfahren beschriebenen Vorteile erreicht.

Eine besonders vorteilhafte Ausführungsform der erfindungsgemäßen Lösung sieht vor, daß die Seitenfixierelemente an in Zustellrichtung in Führungen beweglichen Trägern gehalten sind und daß die Träger entgegengesetzt zur Zustellrichtung über Sperrkeile abstützbar sind.

Dieses Abstützen des Trägers über die Sperrkeile und die Festlegung des Trägers gegen eine Bewegung entgegengesetzt zur Zustellrichtung läßt sich besonders einfach dadurch erreichen, daß die Sperrkeile unbeweglich in ihrer Verschieberichtung festlegbar sind. Dadurch können große Kräfte über die Seitenfixierelemente auf die Träger wirken und von dem in seiner Verschieberichtung festgelegten Sperrkeilen in konstruktiv einfacher Weise aufgenommen werden.

Konstruktiv besonders bevorzugt ist eine Lösung, bei welcher die Sperrkeile auf Schiebern sitzen, die durch Spannbüchsen in ihrer Verschieberichtung festlegbar sind.

Darüber hinaus hat es sich als vorteilhaft erwiesen, wenn die Träger und die Sperrkeile hydraulisch bewegbar sind.

Insbesondere dann, wenn es sich bei dem Maschinenteil um ein Pleuel handelt, ist vorteilhafterweise vorgesehen, daß die Seitenfixierelemente an einer Seitenfläche des Maschinenteils anliegen.

Ein weiteres vorteilhaftes Ausführungsbeispiel sieht vor, daß die Seitenfixierelemente an der Seitenfläche mit einer in Trennrichtung langgestreckten, parallel zur Dornachse schmäler als die Seitenfläche ausgebildeten Anlagefläche anliegen. Eine derartige Ausbildung der Anlagefläche hat den Vorteil, daß dann, wenn die Anlagefläche und die Seitenfläche nicht vollständig parallel zueinander verlaufen, Deformationen im Bereich einer Seitenkante des Maschinenteils vermieden werden, da bei einer Ausbildung der Anlagefläche schmäler als die Seitenfläche die mangelnde Parallelität der beiden Flächen sich weniger gravierend auswirkt.

Da beim Aufstecken des Maschinenteils mit dem Lagerauge auf den Dorn dessen Ausrichtung geringfügige Ungenauigkeiten aufweist, ist vorteilhafterweise vorgesehen, daß die Seitenfixierelemente um eine parallel zur Dornachse verlaufende Kippachse schwenkbar sind. Dadurch haben die Seitenfixierelemente die Möglichkeit, sich unterschiedlichen Orientierungen des auf den Dorn aufgesetzten Maschinenteils anzupassen.

Für den Fall, daß hohe Kräfte auf die Seitenfixierelemente wirken, ist vorgesehen, daß die Seitenfixierelemente die Seitenfläche mit einer in Trennrichtung langgestreckten und parallel zur Dornachse die Seitenfläche übergreifenden Anlagefläche anliegen, was allerdings für den Fall, daß Deformationen im Bereich der Seitenkanten vermieden werden sollen, voraussetzt, daß sich die Anlagefläche parallel zur Seitenfläche des Maschinenteils ausrichten läßt.

Besonders zweckmäßig ist es hierfür, wenn die Seitenfixierelemente um eine parallel zur Trennrichtung und vorzugsweise zusätzlich um eine parallel zur Dornachse verlaufende Kippachse jeweils kippbar sind. Dies läßt sich am einfachsten realisieren, daß die Seitenfixierelemente mit einem Kugelflächenabschnitt an den Trägern gelagert sind.

Um nach dem Bruchtrennen zu verhindern, daß die erste Lagerschale sich soweit bewegt, daß sie nicht mehr mit der zweiten Lagerschale automatisch gefügt werden kann, ist vorteilhafterweise vorgesehen, daß die ersten Seitenfixierelemente die erste Lagerschale gegen eine Bewegung entgegengesetzter Aufstecksrichtung sichern.

Dies läßt sich im einfachsten Fall dadurch bewirken, daß die ersten Seitenfixierelemente einen Übergriff aufweisen.

Darüber hinaus ist es im Rahmen der vorliegenden Erfindung von Vorteil, wenn das erste Querfixierelement vor dem Bruchtrennen an dem Maschinenteil durch Verschieben desselben in Zustellrichtung im wesentlichen spannungsfrei in Zustellrichtung anlegbar und in dieser in Zustellrichtung im wesentlichen spannungsfrei anliegenden Stellung gegen eine weitere Bewegung entgegengesetzt zur Zustellrichtung festlegbar ist.

Desgleichen ist es ebenfalls von Vorteil, wenn das zweite Querfixierelement vor dem Bruchtrennen an dem Maschinenteil durch Verschieben desselben in Zustellrichtung im wesentlichen spannungsfrei in Zustellrichtung anlegbar und in dieser in Zustellrichtung im wesentlichen spannungsfrei anliegenden Stellung gegen eine weitere Bewegung entgegengesetzt zur Zustellrichtung festlegbar ist.

Vorzugsweise ist dabei das Querfixierelement ebenfalls in Zustellrichtung an einem in Führungen beweglichen Träger gehalten, wobei der Träger über einen Sperrkeil abstützbar ist, der vorzugsweise unbeweglich in einer Verschieberichtung, insbesondere durch eine Spannbüchse festlegbar ist.

In Ausbildung der erfindungsgemäßen Lösung ist es, insbesondere um das Maschinenteil im Bereich des Lagerauges symmetrisch zu halten, vorteilhaft, wenn zwei symmetrisch zur Dornachse liegende erste Querfixierelemente vorgesehen sind.

Ergänzend oder alternativ dazu ist es ebenfalls vorteilhaft, wenn zwei symmetrisch zur Dornachse liegende zweite Querfixierelemente vorgesehen sind.

Weitere Merkmale und Vorteile der erfindungsgemäßen Lösung sind Gegenstand der nachfolgenden Beschreibung sowie der zeichnerischen Darstellung einiger Ausführungsbeispiele.

In der Zeichnung zeigen:
- Fig. 1: eine Draufsicht auf eine erfindungsgemäße Bearbeitungsanlage;
- Fig. 2: eine Frontansicht einer erfindungsgemäßen Bruchtrennvorrichtung;
- Fig. 3: eine ausschnittsweise vergrößerte Darstellung eines gespannten Pleuels in der erfindungsgemäßen Bruchtrennvorrichtung gemäß Fig. 2;
- Fig. 4A bis D: eine nochmals vergrößerte Darstellung der Halterung des Pleuels gemäß Fig. 3 auf einem Dorn, wobei

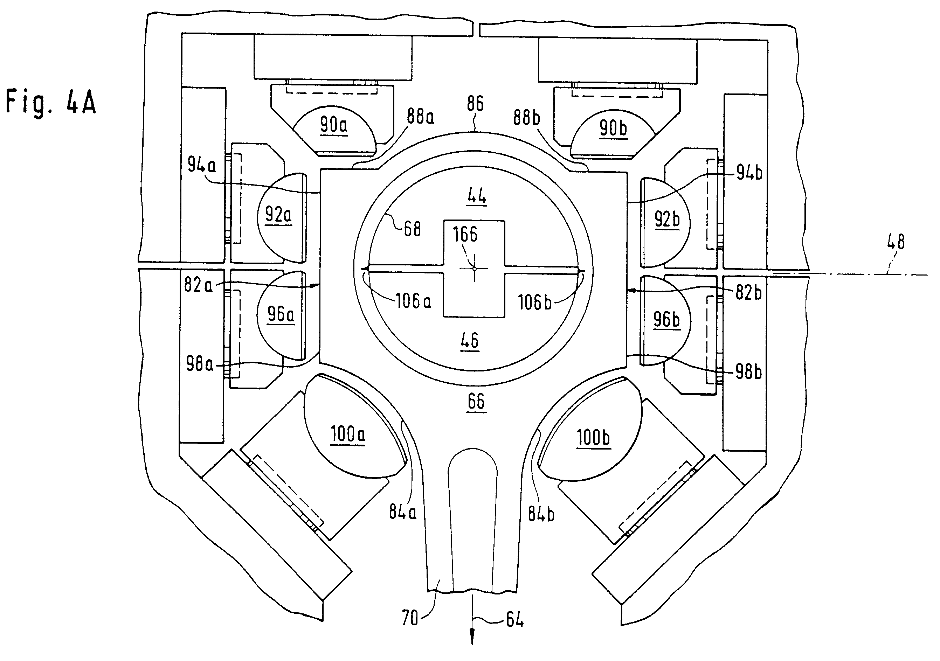

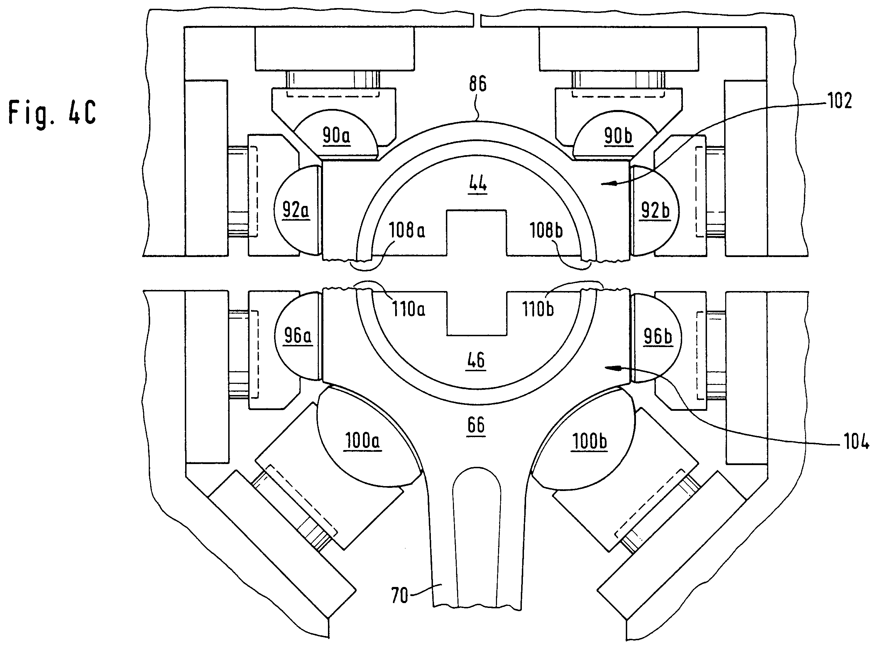

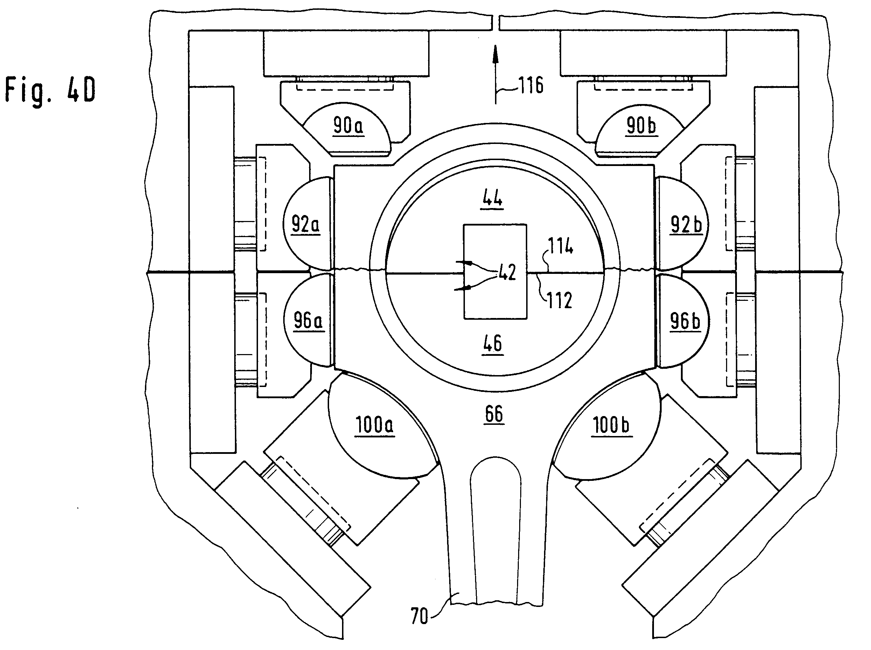

in Fig. 4A das Pleuel auf den Dorn aufgesetzt und die Dornhälften auseinandergefahren sind, wobei Backen zur Fixierung des Pleuels in Aufsteckstellung stehen;

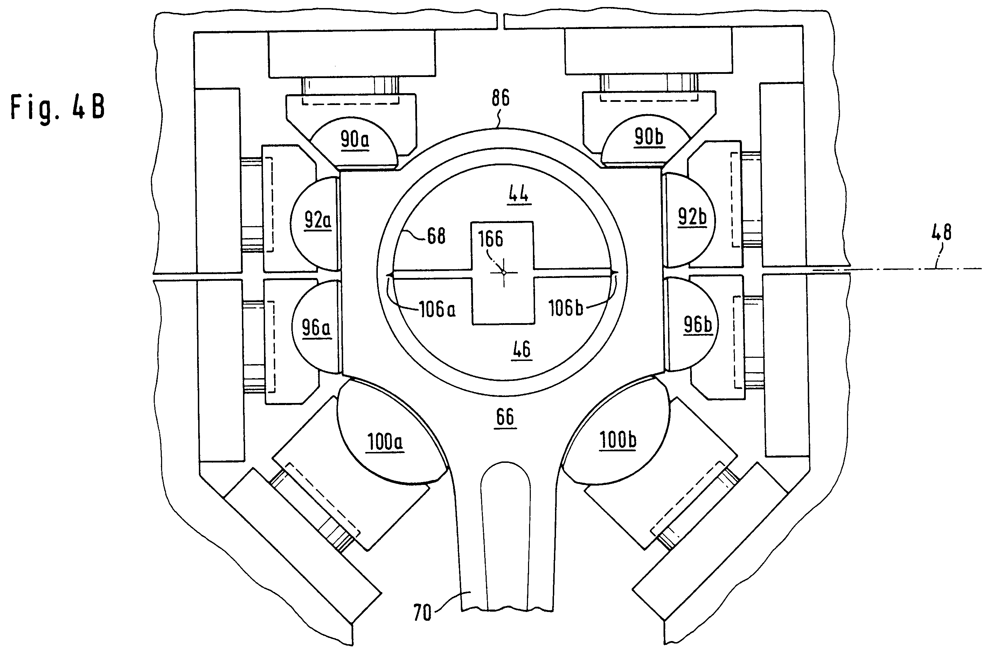

Fig. 4B eine Darstellung wie in Fig. 4A mit in Fixierstellung überführten Backen;
Fig. 4C eine Darstellung der zum Bruchtrennen auseinanderbewegten Hälften des Dorns mit in Fixierstellung stehenden Backen und
Fig. 4D eine Darstellung der nach dem Bruchtrennen zusammengefahrenen Hälften des Dorns zum Fügen der beiden entstandenen Lagerschalen zeigen

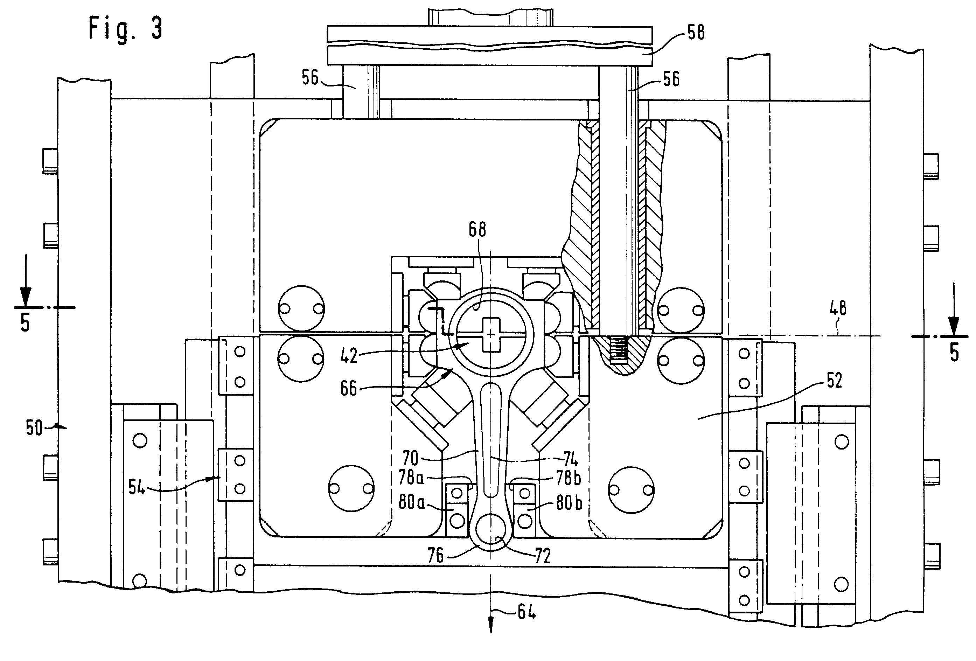

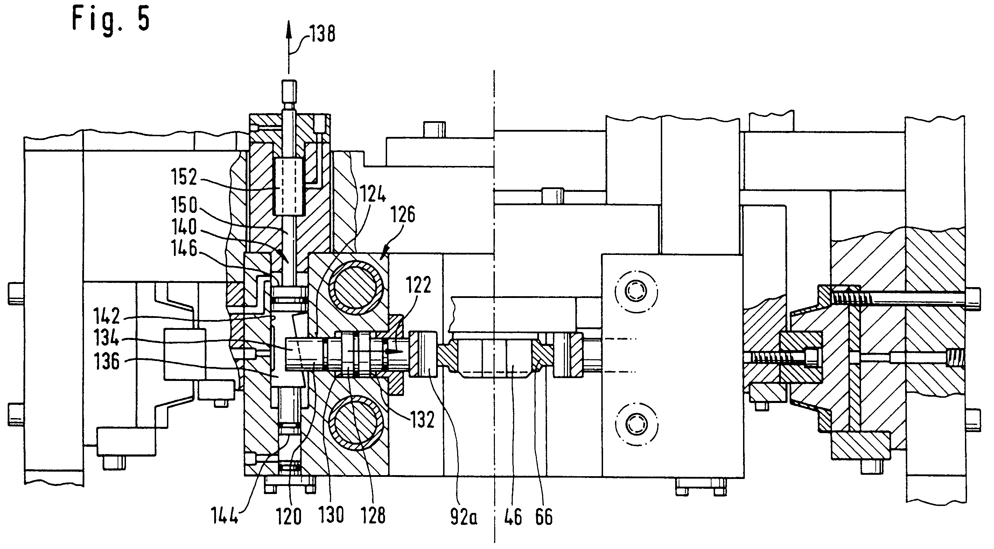

- Fig. 5: einen Schnitt längs Linie 5-5 in Fig. 3;

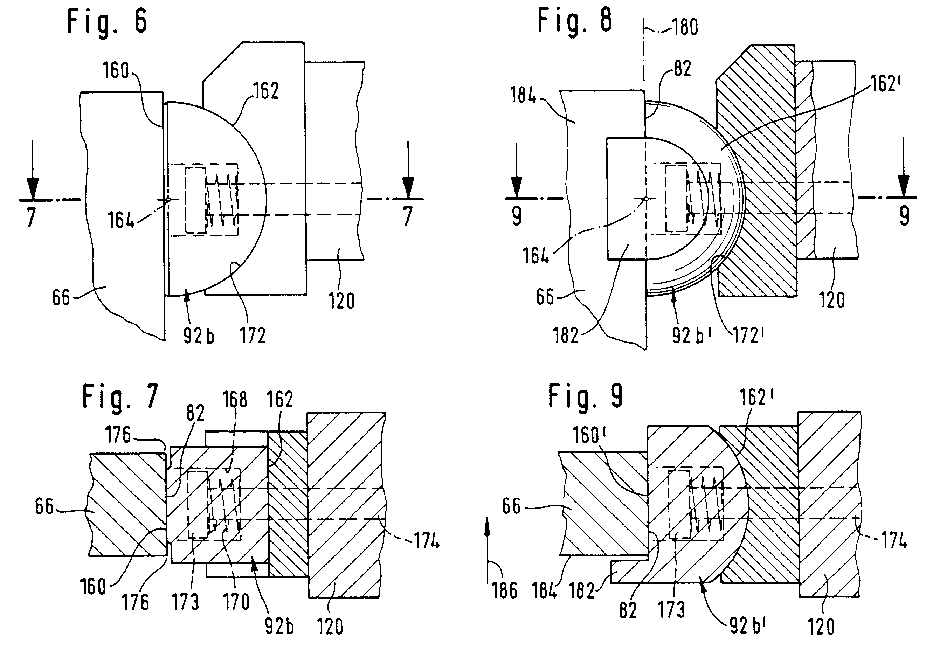

- Fig. 6: eine ausschnittsweise Draufsicht auf einen Seitenfixierbacken;
- Fig. 7: einen Schnitt längs Linie 7-7 in Fig. 6;
- Fig. 8: eine Variante eines Seitenfixierbackens;
- Fig. 9: einen Schnitt längs Linie 9-9 in Fig. 8;

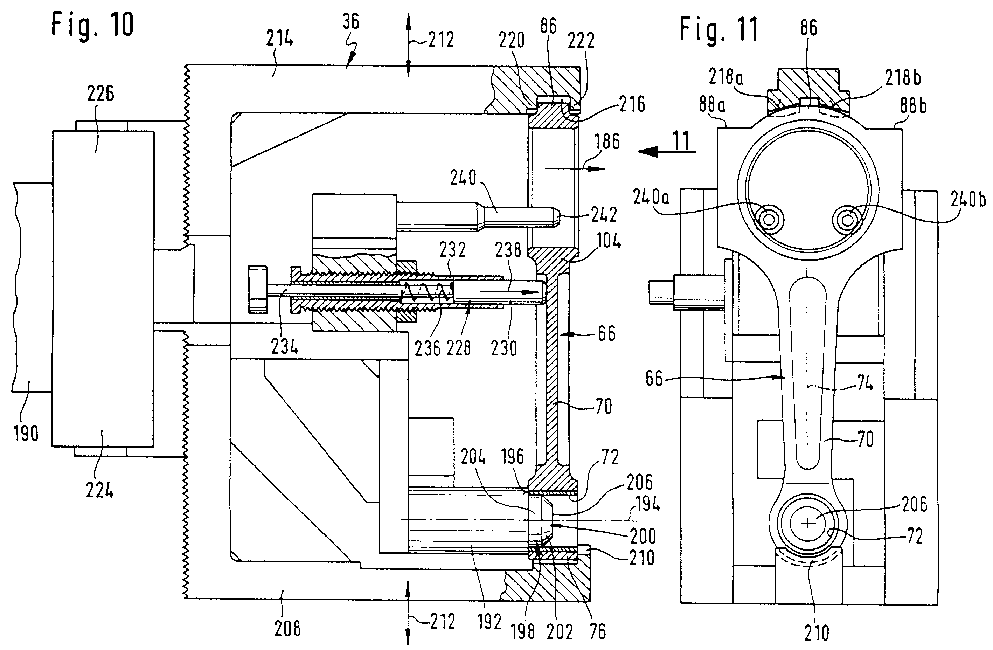

- Fig. 10: eine teilweise geschnittene Seitenansicht eines Greifers;

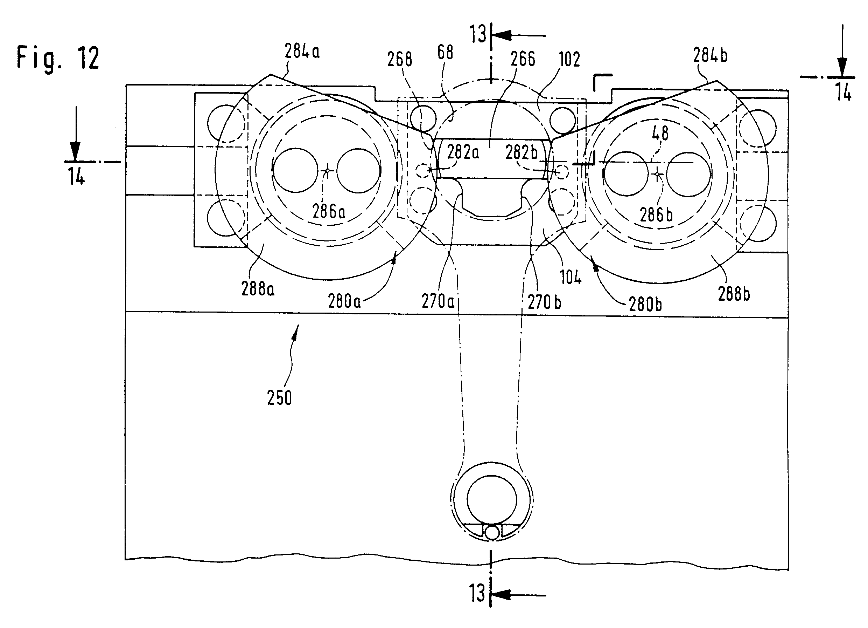

- Fig. 11: eine Draufsicht in Richtung des Pfeils 11 in Fig. 10;
- Fig. 12: eine Draufsicht von vorne auf eine erfindungsgemäße Haltestation;

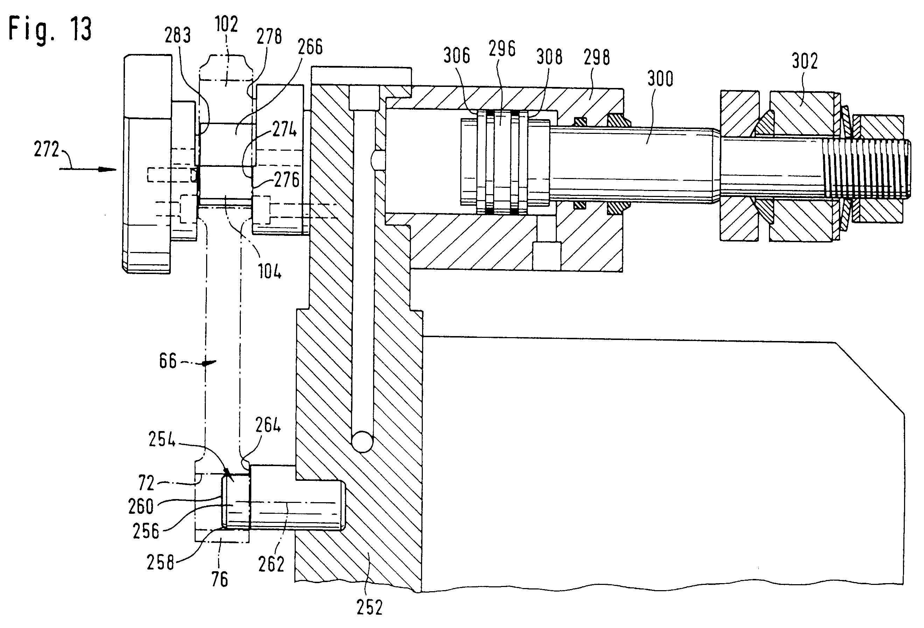

- Fig. 13: einen Schnitt längs Linie 13-13 in Fig. 12 und

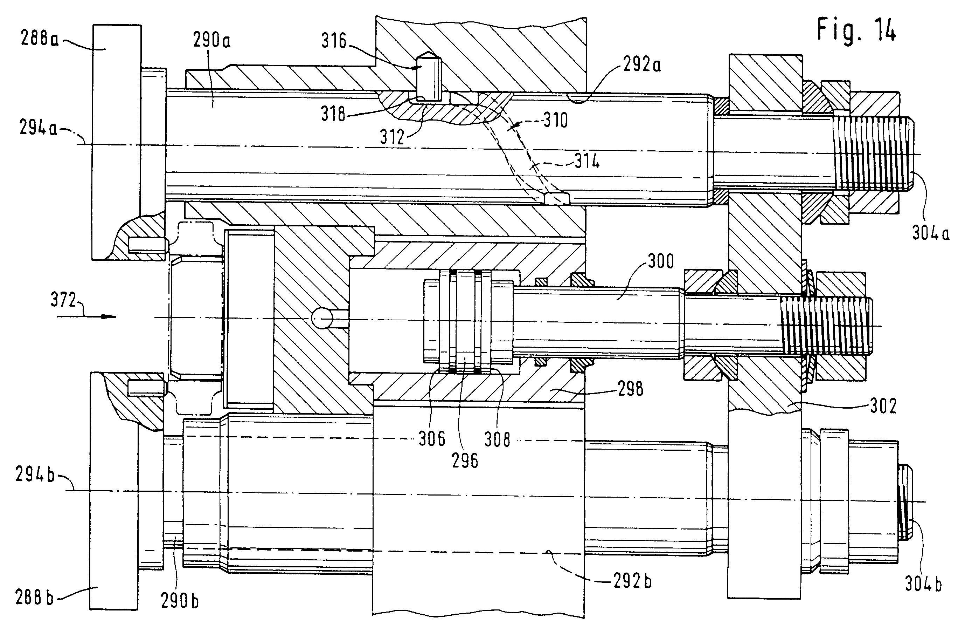

- Fig. 14: einen Schnitt längs Linie 14-14 in Fig. 12.

Ein als Ganzes mit 10 bezeichnetes Ausführungsbeispiel einer Bearbeitungsanlage zum Bruchtrennen von Maschinenteilen im Bereich eines Lagerauges, umfaßt eine Bruchtrennvorrichtung 12, mit einer Bruchtrennstation 14, in welcher eine Bruchtrennung beispielsweise von Pleueln im Bereich des großen Lagerauges derselben durchgeführt wird.

An die Bruchtrennvorrichtung 12 schließen sich Weiterbearbeitungsvorrichtungen 16, 18 und 20 an, die ihrerseits Weiterbearbeitungsstationen 22, 24 und 26 aufweisen, in welchen die bruchgetrennten Pleuel beispielsweise verschraubt, geöffnet und gereinigt, wieder verschraubt und vermessen werden.

Die Bruchtrennstation 14 und die Weiterbearbeitungsstationen 22, 24 und 26 sind in einer Taktrichtung 28 in gleichen Abständen voneinander angeordnet.

Ein Transport der Pleuel zwischen der Bruchtrennstation 14 und den Weiterbearbeitungsstationen 16, 18 und 20 erfolgt mittels auf einem Greiferträger 30 angeordneten Greifern 32, 34, 36, 38 und 40, die zum Zugreifen auf die Bruchtrennstation 14 und die Weiterbearbeitungsstationen 22, 24 und 26 senkrecht zur Taktrichtung bewegbar sind und außerdem zum Weitertransport von einer Station zur nächsten in Taktrichtung 28 um den konstanten Abstand zwischen den einzelnen Stationen 14, 22, 24 und 26.

Vorzugsweise sind alle Greifer 32 bis 40 auf dem gemeinsamen Greiferträger 30 angeordnet und der Greiferträger ist jeweils entweder senkrecht zur Taktrichtung 28 oder in Taktrichtung bewegbar, so daß die Pleuel in den einzelnen Stationen 14, 22, 24 und 26 gleichzeitig gegriffen, gleichzeitig aus diesen Stationen entnommen, gleichzeitig in Taktrichtung 28 weitertransportiert und gleichzeitig wieder in die nächstfolgende Station eingesetzt werden.

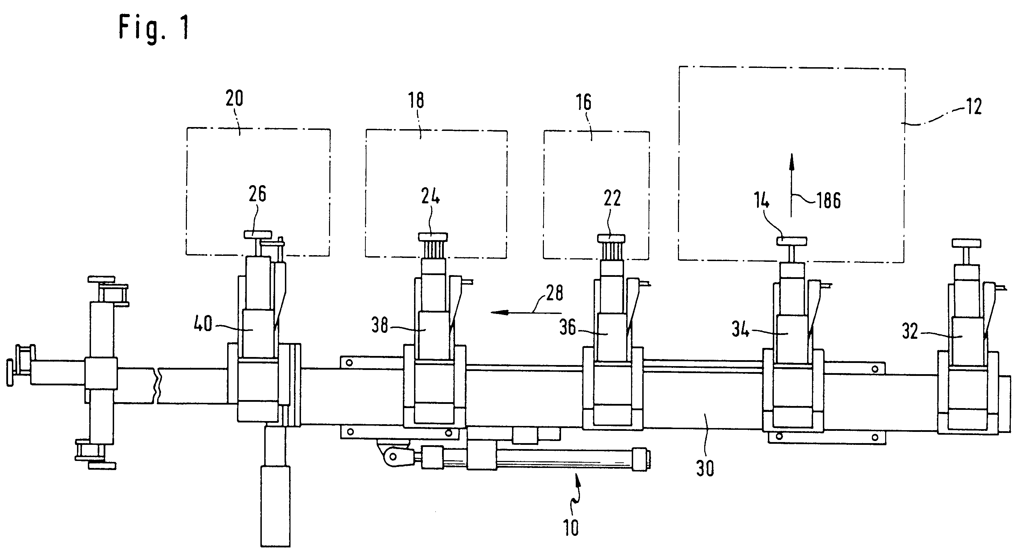

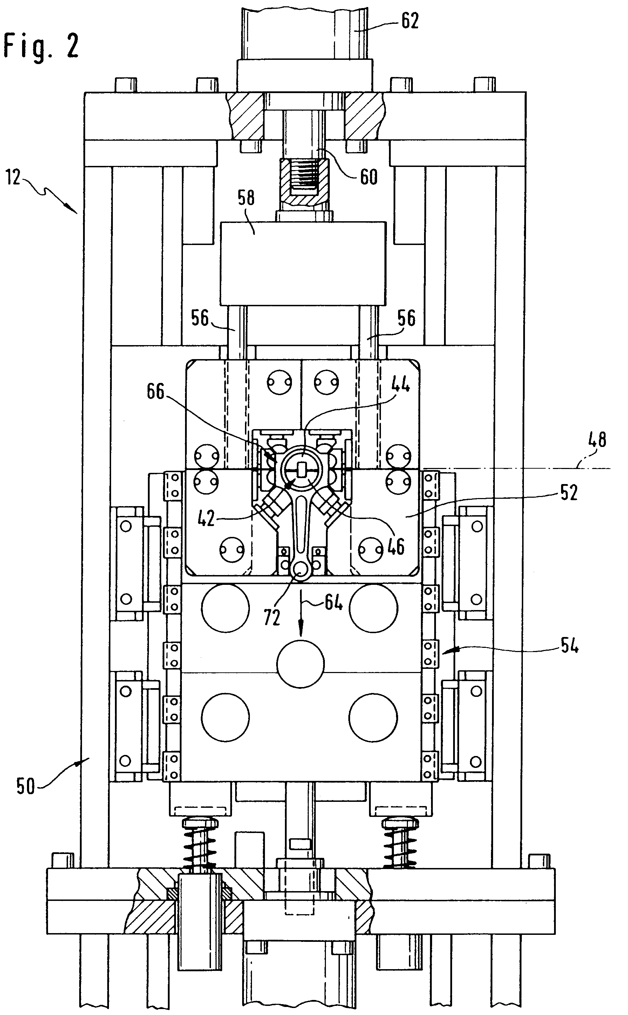

Diese Bruchtrennvorrichtung 12 umfaßt, wie in Fig. 2 im einzelnen dargestellt, einen Dorn 42, welcher in eine erste Hälfte 44 und eine zweite Hälfte 46 durch eine Trennebene 48 geteilt ist, die beispielsweise im in Fig. 1 dargestellten Ausführungsbeispiel waagrecht verläuft. Dabei ist die erste Hälfte 44 des Dorns 42 fest mit einem Gestell 50 der Bruchtrennvorrichtung 12 verbunden, während die zweite Hälfte 46 des Dorns 42 fest auf einem gegenüber dem Gestell 50 verschieblichen Schlitten 52 sitzt.

Dieser verschiebliche Schlitten 52 ist über Linearführungen 54 beiderseits an dem Gestell 50 geführt.

Die Bewegung des Schlittens 52 erfolgt über insgesamt 4 jeweils paarweise symmetrisch zum Dorn 42 angeordnete Druckstangen 56, die von dem Schlitten 52 zu einer Brücke 58 geführt sind, die über dem Dorn 42 angeordnet ist. Diese Brücke 58 ist mit einer Kolbenstange 60 eines fest auf dem Gestell 50 montierten Druckzylinders 62 verbunden und in einer Trennrichtung 64 zum Bruchtrennen eines auf dem Dorn 42 sitzenden Pleuels 66 bewegbar, so daß über die Druckstangen 56 der Schlitten 52 sich ebenfalls in der Trennrichtung 64 bewegt und die zweite Hälfte 46 des Dorns 42 sich mit diesem Schlitten 52 von der ersten Hälfte 44 wegbewegt.

Dadurch erfolgt ein Bruchtrennen des Pleuels 66 in der Trennebene 48.

Wie in Fig. 3 in vergrößertem Maßstab dargestellt, sitzt das Pleuel 66 zum Bruchtrennen mit seinem großen Lagerauge 68 auf dem Dorn 42 und erstreckt sich mit seiner Pleuelstange 70 von dem großen Lagerauge 68 weg bis zu einem Kolbenbolzenlagerauge 72. Die Pleuelstange 70 erstreckt sich dabei mit ihrer Längsrichtung 74 parallel zur Trennrichtung 64, vorzugsweise bei dem in Fig. 2 und 3 dargestellten Ausführungsbeispiel der Bruchtrennvorrichtung 12 in vertikaler Richtung nach unten. Zur Fixierung des Pleuels 66 gegen eine Rotation auf dem Dorn 42 liegt ein das Kolbenbolzenlagerauge 72 umfassende Ende 76 der Pleuelstange 70 zwischen zwei Halteflächen 78a und 78b, welche das Ende 76 zwischen sich einschließen und ihrerseits an Halteklötzen 80a und 80b, die auf dem Schlitten 72 sitzen, getragen sind.

Zum Bruchtrennen ist das Pleuel, wie in den Fig. 4A bis D dargestellt, im Bereich des Lagerauges 68 an zwei einander gegenüberliegenden und vorzugsweise parallel zur Trennrichtung 64 verlaufenden Seitenflächen 82a und 82b, zwei sich von den Seitenflächen 82a und 82b zur Pleuelstange 70 hin verlaufenden Querbögen 84a und 84b, zwei den Querbögen gegenüberliegend und beidseits eines Mittenbogens 86 liegenden äußeren Querflächen 88a und 88b fixiert.

Diese Fixierung erfolgt, wie in Fig. 4B dargestellt, durch erste Querbacken 90a und 90b, die an die äußeren Querflächen 88a und 88b anlegbar sind, erste Seitenfixierbacken 92a und 92b, die an den Seitenflächen 82a und 82b in einem oberen Bereich 94a und 94b anlegbar sind, zweite Seitenfixierbacken 96a und 96b, die an den Seitenflächen 82a und 82b in einem unteren Bereich 98a und 98b anlegbar sind und durch zweite Querbacken 100a und 100b, die an den Querbögen 84a und 84b anlegbar sind.

Die Querbacken 90 und 100 sowie die Seitenfixierbacken 92 und 96 sind dabei von einer Aufsteckstellung für das Pleuel 66, dargestellt in Fig. 4A, in welcher sie jeweils im Abstand von den Querflächen 88, den Seitenflächen 82 und den Querbögen 84 stehen, in einer Zustellrichtung auf das Pleuel 66 bewegbar und in eine Fixierstellung, dargestellt in Fig. 4B bringbar, in welcher die Querbacken 90 und 100 sowie die Seitenfixierbacken 92 und 94 an den Querflächen 88, den Querbögen 84 und den Seitenflächen 82 anliegen und das Pleuel 66 im Bereich des Lagerauges 68 fixieren.

Um das Pleuel 66, insbesondere während des Bruchtrennens, zu fixieren, sind die ersten Querbacken 90 und die ersten Seitenfixierbacken 92 in gleicher Weise wie die erste Hälfte 44 des Dorns 42 gestellfest angeordnet, während die zweiten Seitenfixierbacken 96 und die zweiten Querbacken 100 auf dem Schlitten 52 sitzen und mit der zweiten Hälfte 46 des Dorns 42 gemeinsam bewegbar sind, so daß eine beim Bruchtrennen entstehende erste Lagerschale 102 und außerdem entstehende zweite Lagerschale 104 in gleicher Richtung wie im noch nicht bruchgetrennten Pleuel 66 zueinander ausgerichtet bleiben.

Beim Bruchtrennen erfolgt eine Trennung des Pleuels 66 im Bereich des großen Lagerauges 68 in der Trennebene 48, die am Pleuel 66 durch zwei Einkerbungen 106a und 106b im ganzen Pleuel 66 vorgegeben ist, so daß sich beim Bruchtrennen von den Einkerbungen 106a und 106b ausgehend obere Bruchflächen 108a und 108b sowie untere Bruchflächen 110a und 110b bilden, die bei auseinanderbewegten Hälften 44 und 46 des Dorns 42 im Abstand voneinander stehen.

Nach dem Bruchtrennen des Pleuels 66 und dem Aufteilen desselben in die erste Lagerschale 102 und die zweite Lagerschale 104, an welcher die Pleuelstange 70 mit dem Kolbenbolzenlagerauge einstückig angeformt bleibt, erfolgt ein Fügen der zweiten Lagerschale 104 mit der ersten Lagerschale 102 durch Zurückfahren der zweiten Hälfte 46 des Dorns 42 soweit, bis die einander zugewandten Flächen 112 bzw. 114 der Hälften 44 bzw. 46 aneinander anliegen. Dadurch wird die erste Lagerschale 102 geringfügig nach oben geschoben. Um dies zu erlauben, werden beim Heranfahren der zweiten Hälfte 46 an die erste Hälfte 44 die ersten Querbacken 90a und b zurückgefahren in ihre Aufsteckstellung, so daß die erste Lagerschale 102 geringfügig in einer Fügerichtung 116, die genau entgegengesetzt zur Trennrichtung 64 ist, zusammengefahren werden kann. Dadurch werden die erste Lagerschale 102 und die zweite Lagerschale 104 im Bereich ihrer Bruchflächen 108 und 110 wieder miteinander gefügt, so daß die Bruchflächen 108 und 110 wieder passend aufeinander sitzen und das Lagerauge 68 wieder seine ursprüngliche Form aufweist.

Um ein derartiges passendes Fügen der beim Bruchtrennen entstehenden ersten Lagerschale 102 und der zweiten Lagerschale 104 zu ermöglichen, werden die Querbacken 90 und 100 sowie die Seitenfixierbacken 92 und 96 vor dem Bruchtrennen an die Querflächen 88, die Querbögen 84 und die Seitenflächen 92 angelegt und in dieser angelegten Stellung fixiert, insbesondere so fixiert, daß diese bei einer Deformation der Lagerschalen 102 und 104 während des Bruchtrennens sich nicht weiter in ihrer Zustellrichtung bewegen.

Aus diesem Grund ist, wie exemplarisch am Beispiel des Seitenfixierbackens 92a in Fig. 5 erläutert, jeder der Querbacken 90 und 100 sowie der Seitenfixierbacken 92 und 96 auf einem Träger 120 in seiner Zustellrichtung 122 verschieblich gehalten. Dieser Träger ist in der Zustellrichtung 122 in einer Trägerbohrung 124 eines Trägerhalters 126 geführt gelagert und bildet einen Trägerkolben 128 mit einer ersten Kolbenfläche 130 und einer zweiten Kolbenfläche 132. Dabei ist wahlweise die erste Trägerkolbenfläche 130 oder die zweite Trägerkolbenfläche 132 mit Hydraulikmedium beaufschlagbar, um entweder den Träger in Zustellrichtung 122 bzw. entgegengesetzt zur Zustellrichtung 122 relativ zu dem Trägerhalter zu verschieben.

An seinem den jeweiligen Backen, in diesem Fall dem Seitenfixierbacken 92a, entgegengesetzten rückwärtigen Ende 134 ist der Träger 120 über einen Sperrkeil 136 abstützbar, welcher Teil eines senkrecht zur Zustellrichtung 122 in einer Verschieberichtung 138 bewegbaren Schiebers 140 ist, der ebenfalls im Trägerhalter 126 gelagert ist. Auch dieser Schieber 140 liegt in einem Schieberkanal 142 im Trägerhalter 126 und bildet eine erste Kolbenfläche 144 sowie eine zweite Kolbenfläche 146, die ebenfalls mit Hydraulikmedium beaufschlagbar sind. Bei beaufschlagen der ersten Kolbenfläche 144 mit Hydraulikmedium bewegt sich der Schieber 140 mit dem Sperrkeil 136 in Verschieberichtung 138 solange, bis der Sperrkeil 136 das Ende 134 des Trägers 120 abstützt und somit den Träger 120 gegen eine Bewegung entgegengesetzt zur Zustellrichtung 122 fixiert, während bei einer Beaufschlagung der zweiten Kolbenfläche 146 mit Hydraulikmedium der Schieber 140 mitsamt dem Sperrkeil 136 entgegengesetzt zur Verschieberichtung 138 bewegbar ist und das Ende 134 des Trägers 120 für eine Bewegung entgegengesetzt zur Zustellrichtung 122 freigibt.

Der Schieber 140 umfaßt ferner eine Schieberstange 150, welche durch eine Spannbüchse 152 hindurchgeführt ist. Durch Beaufschlagen der Spannbüchse 152 in radialer Richtung mittels eines Hydraulikmediums ist mit der Spannbüchse 152 die Schieberstange 150 gegen jegliche Verschiebung in Verschieberichtung 138 oder entgegengesetzt zu dieser fixierbar.

Das Anlegen jedes der Backen, im Fall der Fig. 5 des Seitenfixierbackens 92a, erfolgt nun ausgehend von der Aufsteckstellung dadurch, daß durch Beaufschlagen der ersten Trägerkolbenfläche 130 der Seitenfixierbacken 92a an der Seitenfläche 82a des Pleuels 66 angelegt wird. Danach wird durch Beaufschlagen der ersten Kolbenfläche 144 der Schieber 140 mitsamt dem Sperrkeil 136 in Verschieberichtung 138 solange verschoben, bis der Sperrkeil 136 das Ende 134 des Trägers 120 gegen eine Verschiebung in Zustellrichtung 122 abstützt und festlegt. In dieser Stellung wird durch radiale Druckbeaufschlagung der Spannbüchse 152 die Schieberstange 150 in der Spannbüchse 152 und somit relativ zum Trägerhalter 126 gegen eine Verschiebung in Verschieberichtung 138 oder entgegengesetzt dazu fixiert, wobei anschließend die Druckbeaufschlagung des Trägerkolbens 128 und auch des Schiebers 140 im Bereich ihrer Kolbenflächen abgeschaltet wird.

Dadurch bleibt der Seitenfixierbacken 92a an der Seitenfläche 82a spannungsfrei angelegt gehalten, verschiebt sich jedoch nicht bei einer Deformation der Seitenfläche 82a beispielsweise in Richtung der ersten Hälfte 44 des Dorns 42 in Richtung desselben sondern verhindert lediglich eine Bewegung der Seitenfläche 82a entgegengesetzt zur Zustellrichtung 122.

Zum Zurückfahren des Seitenfixierbackens 92a wird zunächst die Spannbüchse 152 gelöst, dann die zweite Kolbenfläche 146 des Schiebers 140 mit Druck beaufschlagt, so daß der Sperrkeil 136 von seiner Anlage an dem Ende 134 des Trägers 120 entgegengesetzt zur Verschieberichtung 138 wegbewegt wird, und anschließend durch Beaufschlagen der zweiten Trägerkolbenfläche 132 der Träger 120 entgegengesetzt zur Zustellrichtung 122 bewegt werden kann.

Wie insbesondere in Fig. 4 und anhand des Seitenfixierbackens 92b exemplarisch in Fig. 6 und 7 dargestellt, weisen die Querbacken 90 und 100 sowie die Seitenfixierbacken 92 und 96 jeweils eine ebene Anlagefläche 160 zur Anlage an dem Pleuel 66 auf sowie eine in Form eines Halbkreises gewölbte Stützfläche 162, mit welcher sie sich an dem Träger 120 abstützen. In dem in Fig. 4 und Fig. 6 sowie Fig. 7 dargestellten Ausführungsbeispiel ist die Stützfläche 162 eine Zylinderfläche zu einer Zylinderachse 164, welche parallel zu einer Dornachse 166 des Dorns 42 verläuft. Dadurch können die Querbacken 90 und 100 sowie die Seitenfixierbacken 92 und 96 jeweils mit parallel zur Dornachse 166 ausgerichteter Anlagefläche 160 verkippt werden und sich somit unterschiedlichen Drehwinkellagen des Pleuels 66 auf dem Dorn 42 anpassen.

Wie in Fig. 7 dargestellt, ist der Seitenfixierbacken 92b und in gleicher Weise auch die Querbacken 90 und 100 sowie alle anderen Seitenfixierbacken 92 und 96 jeweils mit einer in einer Ausnehmung 168 angeordneten Druckfeder 170 in einer Gegenlagerfläche 172 am Träger 120, die ebenfalls die Form einer an die Stützfläche 162 angepaßten Zylinderflächen aufweist, gehalten. Die Druckfeder 170 ist dabei an einem Kopf 173 eines in den Träger 120 eingeschraubten Bolzens 174 abgestützt, wobei der Kopf 173 ebenfalls in der Ausnehmung 168 des Seitenfixierbackens 92b liegt und der Bolzen 174 die Stützfläche 162 durchsetzend in den Träger 120 eingeschraubt ist.

Bei dem Seitenfixierbacken, dargestellt in Fig. 4, 6 und 7, hat die Anlagefläche 160 in Richtung der Dornachse 166 eine geringere Ausdehnung als die Seitenfläche 82 des Pleuels, so daß eine Fixierung des Pleuels 66 nur in einem inneren Bereich der Seitenfläche 82 erfolgt. Dies hat den Vorteil, daß dann, wenn die Seitenfläche 82 nicht parallel zur Dornachse 166 verläuft, die Kraft nur in dem inneren Bereich der Seitenfläche 92 auf die Seitenfläche 82 wirkt, in welchem sich eine nicht parallele Ausrichtung zwischen der Seitenfläche 82 und der Anlagefläche 160 geringer auswirkt als wenn die Anlagefläche 160 sich über die ganze Erstreckung der Seitenfläche 82 in Richtung der Dornachse 166 ausdehnen würde. Im letzteren Fall würde eine Krafteinleitung zu einer Deformation im Bereich einer Seitenkante 176 des Pleuels 66 führen und somit zu einer nicht mehr exakten Ausrichtung der Lagerschalen 102 und 104 nach dem Bruchtrennen.

Eine Alternative zur vorstehend beschriebenen Lagerung der Querbacken 90 und 100 sowie der Seitenfixierbacken 92 und 96 ist ebenfalls exemplarisch anhand eines Seitenfixierbackens 92b' dargestellt.

Bei diesem Ausführungsbeispiel ist der Seitenfixierbacken 92b' nicht nur um die Achse 164 drehbar, sondern auch um eine senkrecht zur Achse 164 und im wesentlichen parallel zu der Seitenfläche 82 des Pleuels 66 verlaufende Achse 180. Die Stützfläche 162' hat somit keine zylindrische Form mehr sondern ist mit zwei Wölbungen, nämlich einer um die Achse 164 und eine um die Achse 180 versehen und im einfachsten Fall ein Ausschnitt aus einer Kugelfläche.

In gleicher Weise ist die Gegenlagerfläche 172' an die Stützfläche 162' angepaßt.

Mit einer derartigen Ausbildung der Stützfläche 162' und der Gegenlagerfläche 172 wurde die Möglichkeit geschaffen, daß die Anlagefläche 160' sich sowohl einer verdrehten Position des Pleuels 66 auf dem Dorn 42 als auch einer nicht parallel zur Dornachse 166 verlaufenden Ausrichtung der Seitenfläche 82 anpassen kann und somit in vorteilhafterweise die Anlagefläche 160' über die gesamte Breite an der Seitenfläche 82 anliegen kann ohne daß eine Deformation im Bereich der Seitenkanten 176 des Pleuels 66 befürchtet werden muß. Eine derartige vollflächige Anlage der Anlagefläche 160'und der Seitenfläche 82 schafft die Möglichkeit, die Flächenpressung zu reduzieren und somit das Pleuel 66 noch besser zu fixieren.

Darüber hinaus ist der Seitenfixierbacken 92b' noch mit einem Übergriff 182 versehen, welcher sich geringfügig über eine dem Gestell 50 der Bruchtrennvorrichtung 12 abgewandte Frontfläche 184 des auf den Dorn 42 aufgesteckten Pleuels 66 erstreckt und somit einer Sicherung der durch Bruchtrennen erzeugten Lagerschalen 102 und 104 gegen eine Herausbewegung entgegengesetzt zu einer Aufsteckrichtung 186 darstellt.

Als zusätzliche Maßnahme wäre es ebenfalls noch denkbar, auch einen Übergriff 182 auf der der Frontfläche gegenüberliegenden Seite des Pleuels vorzusehen.

Zum Aufstecken des Pleuels 66 auf den Dorn 42 ist die erfindungsgemäße Bearbeitungsanlage 10, wie bereits im Zusammenhang mit Fig. 1 erläutert, mit einer Vielzahl von Greifern 32 bis 40 versehen. Diese Greifer 32 bis 40 sind in ihren wesentlichen Merkmalen identisch ausgebildet. Diese werden am Beispiel des Greifers 36 in den Fig. 10 und 11 erläutert.

Der Greifer 36 umfaßt einen Greiferrahmen 190, welcher auf dem Greiferträger 30 sitzt. Fest mit diesem Greiferrahmen 190 verbunden ist ein Führungsdorn 192, welcher an seinem vorderen Ende eine senkrecht zu einer Führungsdornachse 194 verlaufende Ringfläche 196 aufweist, welche über einen Passzylinder 198 übersteht, welcher seinerseits in das Kolbenbolzenlagerauge 72 des Pleuels 66 als passgenaue Führung einführbar ist. In einem vorderen Ende des Passzylinders 198 sitzt noch zur Erleichterung der Einführung des Passzylinders 198 in das Kolbenbolzenlagerauge 72 ein Kegelstumpf 200, welcher wie der Passzylinder 198 ebenfalls koaxial zur Führungsdornachse 194 angeordnet ist. Dieser Kegelstumpf 200 weist Kegelflächen 202 auf, welche sich von Zylinderflächen 204 bis zu einer Stirnfläche 206 des Führungsdorns 192 erstrecken.

Vorzugsweise erstrecken sich der Passzylinder 198 und der Kegelstumpf 200 von der Ringfläche 196 bis zur Stirnfläche 206 in Richtung der Führungsdornachse 194 maximal bis zur Hälfte des Kolbenbolzenlagerauges 72, um die Möglichkeit zu schaffen, das Pleuel 66 mit dem Kolbenbolzenlagerauge 72 auch noch auf einen Fixierdorn, welcher im nachfolgenden beschrieben ist, aufstecken zu können.

Durch den Passzylinder 198 des Führungsdorns 192 wird das Pleuel 66 als Ganzes vom Greifer 36 in einer definierten Lage gehalten. Dadurch ist auch das große Lagerauge 68 definiert ausgerichtet, denn das große Lagerauge 68 sowie das Kolbenbolzenlagerauge 62 werden in den Rohling des Pleuels mit definierten Abständen eingearbeitet.

Um das Pleuel 66 beim Transport durch den Greifer 36 auf dem Führungsdorn 192, insbesondere auf dem Passzylinder 198, zu halten, ist der Greifer 36 mit einem Sicherungsfinger 208 versehen, welcher sich bei auf dem Führungsdorn 192 sitzendem Pleuel auf einer der Pleuelstange 70 gegenüberliegenden Seite des Führungsdorns 192 erstreckt und eine Sicherungsnase 210 aufweist, die in eine das Ende 76 des Pleuels übergreifende und dieses Ende zwischen sich und der Ringfläche 196 fixierende Stellung bringbar ist. Hierzu ist der Sicherungsfinger 208 als Ganzes senkrecht zur Führungsdornachse 194 von dem Führungsdorn 192 weg oder auf diesen zu in einer Halterichtung 212 zwischen einer das Ende 76 sichernden Stellung, dargestellt in Fig. 10, und einer das Ende 76 freigebenden Stellung bewegbar.

Das Pleuel 66 wird durch den Greifer 36 ferner im Bereich des Mittenbogens 86, und zwar vorzugsweise mittig desselben, gegriffen. Hierzu ist der Greifer 36 mit einem Greiffinger 214 versehen, welcher an seinem vorderen Ende ein Halteprisma 216 aufweist, welches seinerseits zwei zueinander geneigte Prismenflächen 218a und 218b aufweist, die parallel zur Führungsdornachse 194 verlaufen und in Richtung auf die äußeren Querflächen 88a und 88b geneigt sind, um das Pleuel 66 so zu fixieren, daß die Fortsetzung der Längsrichtung 74 der Pleuelstange 70 zentriert zwischen den beiden Prismenflächen 218a und 218b liegt.

Darüber hinaus ist das Halteprisma 216 mit zwei Halteansätzen 220 und 222 versehen, die das Pleuel 66 im Bereich des Mittenbogens 86 beidseitig übergreifen und gegen eine Bewegung in Aufsteckrichtung 186 oder entgegengesetzt dazu sichern, wenn das Halteprisma 216 mit den Prismenflächen 218 auf dem Mittenbogen 86 aufliegt.

Um das Halteprisma 216 mit den Prismenflächen 218a und 218b an dem Mittenbogen 86 zur Anlage zu bringen, ist der Greiffinger ebenfalls in der Halterichtung 212 senkrecht zur Führungsdornachse 194 auf den Mittenbogen 86 zu oder von diesem weg bewegbar.

Um den Sicherungsfinger 208 und den Greiffinger 214 in der Halterichtung 212 zu bewegen, sind an dem Greiferrahmen 190 zwei Stellantriebe 224 bzw. 226 vorgesehen, welche von einer zeichnerisch nicht dargestellten Greifersteuerung ansteuerbar sind. Vorzugsweise arbeitet die Greifersteuerung so, daß der Stellantrieb 224 und der Stellantrieb 226 gemeinsam angesteuert werden und zwar so, daß die Stellantriebe 224 und 226 den Sicherungsfinger 208 und den Greiffinger 214 entweder von dem Führungsdorn 192 weg oder auf diesen zu bewegen, so daß entweder die Sicherungsnase 210 und das Halteprisma 216 in ihre das Pleuel 66 freigebende oder das Pleuel 66 sichernde Stellung bewegbar sind.

Um das Pleuel in den einzelnen Stationen 14, 22, 24 und 26 ablegen zu können, ist der Greifer 36 noch zusätzlich mit einem Ausstoßer 228 versehen, welcher parallel zur Führungsdornachse 194 bewegbar ist und so angeordnet ist, daß er ungefähr mittig der Pleuelstange 70 am Übergang derselben zur zweiten Lagerschale 104 auf diese wirkt.

Dieser Ausstoßer ist als Bolzen 230 ausgeführt, welcher in einer Hülse 232 und einer Antriebsstange 234 geführt ist und mit einem durch eine Feder gebildeten Ausstoßerantrieb 236 verbunden ist. Mit diesem Ausstoßerantrieb ist der Bolzen 230 in einer Ausstoßrichtung 238 bewegbar.

Zusätzlich ist der Greifer 36 noch mit zwei Haltefingern 240a und 240b versehen, welche so angeordnet sind, daß sie mit ihren vorderen Enden 242 in das Lagerauge 68 im Bereich der zweiten Lagerschale 104 eingreifen und bezogen auf die Längsrichtung 74 jeweils auf gegenüberliegenden Seiten anliegen und dadurch das Pleuel 66 vor einem Kippen um die Führungsdornachse 194 bewahren.

Diese Haltefinger 240 sind stationär an dem Greiferrahmen 190 angeordnet und dienen lediglich zur Fixierung. Derartige Haltefinger 240 sind lediglich bei den Greifern 36, 38 und 40 vorgesehen, jedoch nicht bei den Greifern 32 und 34, welche zur Bruchtrennstation 14 zugreifen. Ansonsten sind die Greifer 32 und 34 identisch mit dem Greifer 36, so daß diesbezüglich auf die Ausführungen zum Greifer 36 vollinhaltlich Bezug genommen werden kann.

Eine als Ganzes mit 250 bezeichnete Haltestation, dargestellt in den Fig. 12, 13 und 14, wie sie in den Weiterbearbeitungsvorrichtungen 22, 24 und 26 Verwendung findet, umfaßt einen als Ganzes mit 252 bezeichneten Rahmen, welcher einen fest an diesem gehaltenen Fixierdorn 254 trägt. Dieser Fixierdorn 254 umfaßt einen Passzylinder 256, welcher in das Kolbenbolzenlagerauge 72 des Pleuels 66 einführbar ist und zur besseren Einführung eine stirnseitige Abschrägung 258 aufweist. Der Passzylinder 256 ragt mit seiner Stirnfläche 260 maximal bis zur Hälfte in das Kolbenbolzenlagerauge 72. Zur Fixierung des das Kolbenbolzenlagerauge 72 tragenden Endes 76 des Pleuels 66 ist der Fixierdorn 254 noch zusätzlich mit einer sich an den Passzylinder 256 anschließenden und senkrecht zu einer Passzylinderachse 262 ausgerichteten Anschlagfläche 264 versehen, an welche das Ende 76 des Pleuels 66 anlegbar ist.

Zur Ausrichtung des Pleuels 66 in der Haltestation 250 ist diese ferner mit einer Zentrierung 266 versehen, auf welche das Pleuel 66 mit seinem großen Lagerauge 68 aufsetzbar ist.

Die Zentrierung 266 ist dabei so ausgebildet, daß sie beiderseits der Trennebene 48 eine Zentrierfläche 268 für die Lagerschalen 102 und 104 bietet, jedoch nicht das gesamte große Lagerauge 68 ausfüllt, sondern zumindest zwei Ausnehmungen 270a und 270b aufweist, so daß das Pleuel 66 an den Haltefingern 240a, b geführt auf die Zentrierung 266 aufsetzbar ist.

In einer Einsetzrichtung 272 des Pleuels 66 hinter der Zentrierung 266 ist an dem Rahmen 252 eine Anschlagfläche 274 vorgesehen, an welcher die zweite Lagerschale 104 mit einer Rückenfläche 276 anlegbar ist. Über der Anschlagfläche 274 erstreckt sich eine gegenüber der Anschlagfläche 274 geringfügig in Einsetzrichtung 272 zurückgesetzte Führungsfläche 278 für die erste Lagerschale 102, die somit gegenüber der Führungsfläche 278 mit geringfügigem Spiel angeordnet ist.

Das in dem Fixierdorn 254 und die Zentrierung 266 eingesetzte Pleuel 66 ist mittels zweier Haltebacken 280a und 280b an der Anschlagfläche 274 mit der Rückenfläche 276 anlegbar. Hierzu sind die Haltebacken 280a und 280b in eine die Frontfläche 184 des Pleuels 66 übergreifende Stellung bringbar, in welcher in den Haltebacken 280a und 280b angeordnete Druckstifte 282a und 282b gegen die Frontfläche 184 der zweiten Lagerschale 104 drückend anlegbar sind, so daß die zweite Lagerschale 104 mit ihrer Rückenfläche an der Anschlagfläche 274 liegt. Die Druckstifte 282a und 282b sind hierzu vorzugsweise so angeordnet, daß sie in einem Bereich der Frontfläche 184 nahe der Trennebene 48 gegen die Frontfläche 184 drücken.

Ferner weisen die Haltebacken 280a, b noch eine sich über den Druckstiften 282a, 282b erstreckende Führungsfläche 283 auf, welche im wesentlichen parallel zur Führungsfläche 278 und mit geringfügigem Abstand zur Frontfläche 184 der ersten Lagerschale 102 verläuft, so daß die erste Lagerschale insgesamt mit Spiel zwischen den Führungsflächen 278 und 283 zwanglos gehalten ist.

Um das Pleuel 66 in die Haltestation 250 in Einsetzrichtung 272 einsetzen oder herausnehmen zu können, sind die Haltebacken 280a und 280b so zur Seite schwenkbar, daß das Pleuel 66 mit seinen beiden Lagerschalen 102 und 104 an diesem vorbeibewegbar ist.

Vorzugsweise sind die Haltebacken 280a und 280b Segmente einer sich ausgehend von einer Sekante 284a und 284b zu einem Kreismittelpunkt 286a und 286b hin erstreckenden Teilkreisscheibe 288a und 288b, wobei die Sekante 284a und 284b so weit in Richtung des Kreismittelpunkts 286a und 286b verläuft, daß dann, wenn die Teilkreisscheiben 288a und 288b so verdreht sind, daß die Sekanten 284a und 284b parallel zueinander stehen, ein Einsetzen oder Herausnehmen des Pleuels 66 in der Einsetzrichtung 272, oder entgegen dazu, an den Teilkreisscheiben 288a und 288b vorbei möglich ist. Bei dieser Ausführungsform erstrecken sich dann die Haltehacken 280a und 280b im Anschluß an die Sekanten 284a und 284b und sind durch Drehen der Teilkreisscheiben 288a und 288b in eine die Frontfläche 184 des Pleuels 66 übergreifende Stellung bringbar.

Hierzu sind die Teilkreisscheihen 288a und 288b jeweils auf einer Welle 290a und 290b gehalten, die ihrerseits in einer Bohrung 292a und 292b im Rahmen 252 der Haltestation 250 drehbar und in Richtung ihrer Längsachse 294a und 294b verschiebbar ist.

Eine Bewegung der Wellen 290a und 290b in Richtung ihrer Längsachse 294a und 294b erfolgt durch einen Kolben 296, welcher zwischen den Bohrungen 292a und 292b im Rahmen 252 in einem Zylindergehäuse 298 parallel zu den Längsachsen 294a und 294b verschieblich gelagert ist. Eine Kolbenstange 300 dieses Kolbens 296 ist über ein Joch 302 mit den den Teilkreisscheiben 288a und 288b gegenüberliegenden Enden 304a und 304b der Wellen 290a bzw. 290b verbunden, so daß die Wellen 290a und 290b gemeinsam über die Kolbenstange 300 bei Beaufschlagung entweder einer ersten Kolbenfläche 306 oder einer zweiten Kolbenfläche 308 in Richtung der Achsen 294a und 294b verschiebbar sind.

Darüber hinaus ist jede der Wellen 290a und 290b mit einer Nut 310 versehen, welche in einem ersten Abschnitt 312 parallel zur Längsachse 294a bzw. 294b verläuft und in einem sich daran anschließenden zweiten Abschnitt 314 in Form eines Gewindegangs. In diese Nut 310 greift ein Stift 316 mit seinem vorderen Ende 318 ein.

In der Stellung der Haltehacken 280a und 280b, in welcher diese mittels der Druckstifte 282a und 282b auf die Frontfläche 184 der zweiten Lagerschale 104 drücken, liegt das vordere Ende 318 des Stifts 316 in einem vorderen Bereich des ersten Abschnitts 312. Erfolgt nun bei Beaufschlagung der zweiten Kolhenfläche 308 mit Hydraulikmedium eine Bewegung der Wellen 290a und 290b entgegengesetzt zur Einsetzrichtung 372 und somit in Richtung eines Ahhehens der Druckstifte 282a und 282b von der Frontfläche 184, so bewegt sich das vordere Ende 318 des Stifts 316 zunächst in dem ersten Abschnitt 312, so daß die Wellen 290a und 290b lediglich eine Linearbewegung parallel zu ihren Achsen 294a bzw. 294b durchführen. Nach Durchlaufen des ersten Abschnitts 312 kommt das vordere Ende 318 dann in den zweiten Abschnitt 314, der in der Form eines Gewindegangs in der Welle 290a bzw. 290b verläuft, so daß bei einer weiteren Bewegung der jeweiligen Welle 290a bzw. 290b in dieser Richtung die Welle 290a, b nicht nur wie bisher eine Linearbewegung in Richtung der Achsen 294a und 294b durchführen, sondern gleichzeitig eine Drehung, welche zu einer Schwenkbewegung der Teilkreisscheiben 288a und 288b führt und zwar dergestalt, daß am Ende der Schwenkbewegung die Druckstifte 282a und 282b vollständig von der Frontfläche abgehoben und so zur Seite geschwenkt sind, daß die Sekanten 284a und 284b parallel zueinander stehen. Dies ist beispielsweise eine Schwenkbewegung der Teilkreisscheiben 288a und 288b um ungefähr 70°. In dieser vorderen Stellung ist nun das Pleuel 66 entgegengesetzt zur Einsetzrichtung 272 aus der Haltestation 250 entnehmbar und ein neues Pleuel in diese einsetzbar.

Wird dagegen die erste Kolbenfläche 306 mit Druckmedium beaufschlagt, so bewegen sich die Welle 290a bzw. 290b in Einsetzrichtung 272 und führen wiederum aufgrund des Entlanglaufens des vorderen Endes 318 des Stifts 316 in dem zweiten Abschnitt 314 der Nut 310 eine Rückschwenkbewegung durch, solange, bis das vordere Ende 318 in den ersten Abschnitt gelangt, so daß der letzte Teil der Bewegung keine Schwenkhewegung mehr umfaßt, sondern lediglich eine lineare Verschiebung, mit welcher die Druckstifte 282a und 282b an der Frontfläche 184 zur Anlage gebracht werden.

Die erfindungsgemäße Bearbeitungsanlage 10 erfolgt nun folgendermaßen.

Zunächst wird vom Greifer 32 ein noch nicht bruchgetrenntes Pleuel 66 gegriffen, der gesamte Greiferträger 30 dann zunächst in Taktrichtung 28 und anschließend in Aufsteckrichtung 186 bewegt, so daß der Greifer 32 ein nicht bruchgetrenntes Pleuel 66 in die Bruchtrennstation 14 einsetzt.

Hierzu stehen die Querbacken 90 und 100 sowie die Seitenfixierbacken 92 und 96 in ihrer Aufsteckstellung und die beiden Hälften 44 und 46 des Dorns sind soweit zusammengefahren, daß sie mit ihren einander zugewandten Flächen 112 und 114 aneinander anliegen.

Nach Aufstecken des Pleuels 66 werden die beiden Hälften 44 und 46 des Dorns 42 soweit auseinandergefahren, daß sie in dem großen Lagerauge 68 anliegen und das Pleuel 66 in seiner aufgesteckten Stellung fixiert halten.

Gleichzeitig ist das Pleuel 66, wie in Fig. 3 dargestellt, gegen eine Schwenkbewegung um die Dornachse 166 durch das zwischen den Halteflächen 78a und 78b liegende Ende 76 der Pleuelstange 70 gesichert.

In dieser Stellung werden die Querbacken 90 und 100 sowie die Seitenfixierbacken 92 und 96, wie in Fig. 4b dargestellt, in die Fixierstellung gefahren, in welcher sie an dem Pleuel 66 im Bereich des großen Lagerauges 68 wie beschrieben anliegen.

Durch das anschließende Bewegen des Schlittens 52 mittels des Druckzylinders 62 in Trennrichtung 64 erfolgt ein Bruchtrennen des Pleuels 66 in der Bruchtrennebene 48 und somit eine Unterteilung desselben in die erste Lagerschale 102 und die zweite Lagerschale 104.

Ein anschließendes Fügen des bruchgetrennten Pleuels, d.h. der ersten Lagerschale 102 und der zweiten Lagerschale 104 erfolgt durch Zurückfahren der zweiten Hälfte 46 entgegengesetzt zur Trennrichtung 64 solange, bis, wie in Fig. 4D dargestellt, die einander zugewandten Flächen 112 und 114 der beiden Hälften 44 und 46 aneinander anliegen.

Vor dem Zurückfahren der zweiten Hälfte 46 werden die ersten Querbacken 90 noch in ihre Aufsteckstellung zurückgefahren, so daß die erste Lagerschale 102, wie in Fig. 4D dargestellt, sich nach dem Berühren der Bruchflächen 108 und 110 entgegengesetzt zur Trennrichtung 64 nach oben bewegen kann.

Da die Seitenfixierbacken 92 und 96 bei dem Bruchtrennen in der Zustellrichtung 122 jeweils nicht nachsetzend ausgebildet sind, sondern in ihrer Stellung, in welcher sie beim ursprünglichen Anlegen an das noch nicht bruchgetrennte Pleuel 66 gebracht wurden, verblieben sind, werden die erste Lagerschale 102 und die zweite Lagerschale 104 in ihrer ursprünglichen Stellung auch nach dem Bruchtrennen gehalten, so daß beim Verfahren der zweiten Hälfte 46 des Dorns 42 entgegengesetzt zur Trennrichtung 64 die Bruchflächen 108 und 110 passend gefügt werden.

Noch während die erste Lagerschale 102 und die untere Lagerschale 104 in der gefügten Position durch die beiden Querbacken 100 und die Seitenfixierbacken 92 und 96 gehalten werden, fährt der Greifer 34 in Aufsteckrichtung 186 auf das gefügte Pleuel 66 zu und zwar so, daß dieser mit dem Passzylinder 198 des Führungsdorns in das Kolbenbolzenlagerauge 72 hineinfährt, wobei der Sicherungsfinger 208 und der Greiffinger 214 in ihrer das Pleuel 66 freigebenden Stellung stehen. Nach dem Einfahren des Passzylinders 198 werden der Sicherungsfinger 208 und der Greiffinger 214 durch die Stellantriebe 224 und 226 in ihre das Pleuel 66 sichernde Stellung bewegt.

Vor dem Entnehmen des Pleuels werden dann die zweiten Querbacken 100 und die Seitenfixierbacken 92 und 96 in ihre in Fig. 4A dargestellte Aufsteckstellung zurückbewegt, so daß das Pleuel 66 mit gefügten Lagerschalen 102 und 104 entnommen werden kann. Der Greifer 34 bewegt sich dabei entgegengesetzt zur Aufsteckrichtung 186 quer zur Taktrichtung 28 zurück, dann in Taktrichtung 28 und dann wieder in Einsetzrichtung 272 in Richtung auf die Haltestation 250 in der Weiterbearbeitungsvorrichtung 16.

Für das Einsetzen des gefügten Pleuels in die Haltestation 250 sind, wie bereits erwähnt, die Teilkreisscheiben 288a und 288b so orientiert, daß die Sekanten 284a und 284b parallel stehen und die Haltehacken 280a und 280b zur Seite geschwenkt sind.

Beim Einsetzen des gefügten Pleuels 66 in die Haltestation 250 wird die Führungsdornachse 194 koaxial zur Passzylinderachse 262 des Fixierdorns 254 ausgerichtet, so daß der Fixierdorn 254 mit seinem Passzylinder 256 ebenfalls in das Kolbenbolzenlagerauge 72 eingreift, während der Führungsdorn 192 ebenfalls mit seinem Passzylinder 198 noch in Eingriff mit dem Kolbenbolzenlagerauge 72 ist. Dies ist dadurch möglich, daß sich sowohl der Führungsdorn 192 als auch der Passzylinder 256 jeweils maximal bis zur Hälfte in das Kolbenbolzenlagerauge 72 hinein erstrecken.

Beim Bewegen des gefügten Pleuels in der Einsetzrichtung 272 wird dieses einerseits mit dem Ende 76 an der Anschlagfläche 264 des Fixierdorns 254 angelegt und andererseits mit der Rückenfläche 276 der zweiten Lagerschale 104 an der Anschlagfläche 174. Gleichzeitig wird die Zentrierung 266 in das große Lagerauge 68 eingeführt und hält das Pleuel 66 damit zusätzlich fixiert.

In dieser Stellung wird das Pleuel 66 noch solange gehalten, bis die Haltehacken 280a und 280b vor die Frontfläche 184 geschwenkt sind und mit den Druckstiften 282a und 282b gegen die zweite Lagerschale 104 in der Einsetzrichtung 172 drücken und somit diese gegen die Anschlagfläche 274 mit Druck anlegen.

Da der Greifer 34 mit dem Führungsdorn 192 in das Kolbenbolzenlagerauge 72 eingreift und mit dem Halteprisma 216 die erste Lagerschale 102 gegen die zweite Lagerschale 104 drückt, ansonsten jedoch nicht an dem Pleuel 66 eingreift, kann eine derartige Bewegung der Haltebacken 280a und 280b ohne Kollision mit dem Greifer 34 erfolgen.

Nachdem das gefügte Pleuel durch die Haltebacken 280a und 280b fixiert ist, werden der Sicherungsfinger 208 und der Greiffinger 214 durch die Stellantriebe 224 und 226 wieder in die das gefügte Pleuel 66 freigebende Stellung bewegt und der Greifer 34 kann mit seinem Führungsdorn 192, insbesondere dem Passzylinder 198 desselben, aus dem Kolbenbolzenlagerauge entgegengesetzt zur Einsetzrichtung 272 herausfahren.

In dieser Stellung liegt nunmehr die erste Lagerschale 102 frei auf der in der Haltestation 250 festgehaltenen zweiten Lagerschale 104, wobei die erste Lagerschale 102 zwischen den Führungsflächen 278 und 283 mit Spiel fixiert ist, so daß die Bruchflächen 108 und 110 die beim Fügen passend ineinandergefunden haben, durch das Spiel bei der Führung der Lagerschale 102 erneut die Möglichkeit haben, passend ineinander zu bleiben, und somit Verformungen der ersten und zweiten Lagerschale 102 und 104 und eine daraus resultierende nicht planparallele Ausrichtung der Frontflächen und Rückenflächen derselben die Fügung der Bruchflächen 108 und 110 aufheben.

In der Haltestation 250 kann nunmehr beispielsweise ein Eindrehen von Schrauben erfolgen, um die erste Lagerschale 102 mit der zweiten Lagerschale 104 zu verschrauben.

In gleicher Weise kann die Haltestation 250 in der nächsten Weiterbearbeitungsstation 24 und 26 Anwendung finden, in welcher beispielsweise die in der Weiterbearbeitungsstation 22 eingedrehten Schrauben erneut gelöst werden, die Bruchflächen 108 und 110, beispielsweise durch Ausblasen gereinigt werden und die Schrauben wieder eingedreht werden.

Ein Weitersetzen von der Weiterbearbeitungsstation 22 in die Weiterbearbeitungsstation 24 und 26 erfolgt dann durch die Greifer 36 und 38 und der Greifer 40 entnimmt dann das Pleuel aus der Weiterbearbeitungsstation 26 und legt es auf eine weitere Transportvorrichtung.

Die Greifer 36, 38 und 40 sind noch, wie bereits beschrieben, mit den Haltefingern 240 versehen, um dem Pleuel beim Weitertransport von der Weiterbearbeitungsstation 22 zu den Weiterbearbeitungsstationen 24 und 26 einen noch besseren Halt zu geben.

## Patentansprüche

1. Bearbeitungsverfahren, umfassend ein Verfahren zum Transport eines in eine erste und eine zweite Lagerschale bruchgetrennten und anschließend gefügten Maschinenteils als Ganzes, insbesondere eines Pleuels,
**dadurch gekennzeichnet**, daß das Maschinenteil von einem Greifer gegriffen wird und das von dem Greifer beim Greifen die erste Lagerschale gegen die zweite Lagerschale gedrückt wird.

2. Bearbeitungsverfahren nach Anspruch 1, dadurch gekennzeichnet, daß das Maschinenteil ein Pleuel ist und daß von dem Greifer in das Kolbenbolzenlagerauge gegriffen wird.

3. Bearbeitungsverfahren nach Anspruch 2, dadurch gekennzeichnet, daß von dem Greifer die erste Lagerschale gegen die fest mit dem Kolbenbolzenlagerauge verbundene zweite Lagerschale gepreßt wird.

4. Bearbeitungsverfahren nach einem der voranstehenden Ansprüche, dadurch gekennzeichnet, daß von dem Greifer (32 bis 40) ungefähr mittig auf die erste Lagerschale (102) gedrückt wird.

5. Bearbeitungsverfahren nach einem der Ansprüche 2 bis 4, dadurch gekennzeichnet, daß das Pleuel von dem Greifer ausschließlich zum Eingreifen in das Kolbenbolzenlagerauge und Drücken gegen die erste Lagerschale in einer definierten Stellung gehalten wird.

6. Bearbeitungsanlage umfassend einen Greifer für das ein Lagerauge aufweisende Maschinenteil, welches durch Bruchtrennen in eine erste und zweite Lagerschale geteilt ist und bei welchem die erste und die zweite Lagerschale gefügt sind, dadurch gekennzeichnet, daß der Greifer so ausgebildet ist, daß er beim Greifen des Maschinenteils (66) die erste Lagerschale (102) gegen die zweite Lagerschale (104) gedrückt hält.

7. Bearbeitungsanlage nach Anspruch 6, dadurch gekennzeichnet, daß das Maschinenteil ein Pleuel mit einem Kolbenbolzenlagerauge ist und daß der Greifer (32 bis 40) einen Führungsdorn (192) zum Eingriff in das Kolbenbolzenlagerauge (72) aufweist.

8. Bearbeitungsanlage nach Anspruch 7, dadurch gekennzeichnet, daß der Führungsdorn (192) einen in das Kolbenbolzenlagerauge (72) einführbaren Passzylinder (198) aufweist.

9. Bearbeitungsanlage nach Anspruch 7 oder 8, dadurch gekennzeichnet, daß der Führungsdorn (192) das Kolbenbolzenlagerauge (72) nur teilweise durchgreift.

10. Bearbeitungsanlage nach einem der Ansprüche 7 bis 9, dadurch gekennzeichnet, daß der Greifer (32 bis 40) einen Sicherungsfinger (208) mit einer das auf dem Führungsdorn (192) sitzende Kolbenbolzenlagerauge (72) sichernden Sicherungsnase (210) aufweist.

11. Bearbeitungsanlage nach einem der Ansprüche 7 bis 10, dadurch gekennzeichnet, daß das Kolbenbolzenlagerauge (72) fest mit der zweiten Lagerschale (104) verbunden ist und daß der Greifer (32 bis 40) einen beweglichen Greiffinger (214) zum Beaufschlagen der ersten Lagerschale (102) in Richtung des Führungsdorns (192) aufweist.

12. Bearbeitungsanlage nach Anspruch 11, dadurch gekennzeichnet, daß der Greiffinger (214) ein Halteprisma (216) zum Beaufschlagen der ersten Lagerschale (102) aufweist.

13. Bearbeitungsanlage, umfassend eine Haltestation für ein durch Bruchtrennen in eine erste Lagerschale und eine zweite Lagerschale unterteiltes Maschinenteil, wobei die erste und die zweite Lagerschale gefügt aufeinander sitzen, dadurch gekennzeichnet, daß die Haltestation eine in das Lagerauge (68) greifende Zentrierung (266) aufweist.

14. Bearbeitungsanlage nach Anspruch 13, dadurch gekennzeichnet, daß das Maschinenteil ein Pleuel (66) ist und daß die Haltestation (250) einen in ein Kolbenbolzenlagerauge (72) desselben eingreifenden Fixierdorn (254) aufweist.

15. Bearbeitungsanlage nach Anspruch 13 oder 14, dadurch gekennzeichnet, daß die Haltestation (250) eine sich quer zur Einsetzrichtung (272) erstreckende rückwärtige Anschlagfläche (274) für eine der Lagerschalen (104) aufweist.

16. Bearbeitungsanlage nach Anspruch 15, dadurch gekennzeichnet, daß die Haltestation (250) Haltebacken (280) aufweist, mit welchen die an der rückwärtigen Anschlagfläche (274) anliegende Lagerschale (104) gegen diese beaufschlagbar ist.

17. Bearbeitungsanlage nach Anspruch 16, dadurch gekennzeichnet, daß die nicht gegen die rückwärtige Anschlagfläche (274) beaufschlagt angelegte Lagerschale (102) mit geringem Spiel gegen eine Bewegung in Einsetzrichtung (272) und entgegengesetzt dazu geführt ist.

18. Bearbeitungsverfahren für ein ein Lagerauge aufweisendes Maschinenteil, bei welchem das Lagerauge in einer Bruchtrennstation in eine erste und zweite Lagerschale unterteilt wird, dadurch gekennzeichnet, daß das Maschinenteil von der Bruchtrennstation in auf die Bruchtrennstation folgende Weiterbearbeitungsstationen transportiert wird und daß die Bruchtrennstation und die Weiterbearbeitungsstationen in einer Taktrichtung in gleichen Abständen voneinander angeordnet sind.

19. Bearbeitungsverfahren nach Anspruch 18, dadurch gekennzeichnet, daß die Maschinenteile von Greifern transportiert werden, welche hierzu in Taktrichtung und senkrecht zur Taktrichtung auf die Stationen zu bewegt werden.

20. Bearbeitungsverfahren nach Anspruch 19, dadurch gekennzeichnet, daß die Maschinenteile von einer Vielzahl von Greifern in den einzelnen Stationen gleichzeitig gegriffen, gleichzeitig aus diesen Stationen entnommen, gleichzeitig weitertransportiert und gleichzeitig in die nächstfolgende Station eingesetzt werden.

21. Bearbeitungsverfahren nach einem der Ansprüche 18 bis 20, dadurch gekennzeichnet, daß in einer Weiterbearbeitungsstation die bruchgetrennten Maschinenteile verschraubt werden.

22. Bearbeitungsverfahren nach einem der Ansprüche 18 bis 21, dadurch gekennzeichnet, daß in einer Weiterbearbeitungsstation die bruchgetrennten Maschinenteile geöffnet, gereinigt und wiederverschraubt werden.

23. Bearbeitungsverfahren nach einem der Ansprüche 18 bis 22, dadurch gekennzeichnet, daß in einer Weiterbearbeitungsstation die bruchgetrennten Maschinenteile vermessen werden.

24. Bearbeitungsverfahren nach einem der Ansprüche 18 bis 23, dadurch gekennzeichnet daß in einer Weiterbearbeitungsstation die eingedrehten Schrauben erneut gelöst werden, die Bruchflächen durch Ausblasen gereinigt werden und die Schrauben wieder eingedreht werden.

25. Bearbeitungsanlage für ein ein Lagerauge aufweisendes Maschinenteil, umfassend eine das Lagerauge in eine erste und eine zweite Lagerschale teilende Bruchtrennstation, dadurch gekennzeichnet, daß die Bearbeitungsanlage auf die Bruchtrennstation (14) folgende Weiterbearbeitungsstationen (22, 24, 26) umfasst und daß das Maschinenteil (66) von der Bruchtrennstation (14) zu den Weiterbearbeitungsstationen (22, 24, 26) mittels eines Greifers (32 bis 40) transportierbar ist.

26. Bearbeitungsanlage nach Anspruch 25, dadurch gekennzeichnet, daß die Bruchtrennstation (14) und die Weiterbearbeitungsstationen (22, 24, 26) in einer Taktrichtung (28) in gleichen Abständen voneinander angeordnet sind.

27. Bearbeitungsanlage nach Anspruch 25 oder 26, dadurch gekennzeichnet, daß der Greifer (32 bis 40) in einer Taktrichtung (28) von einer Station (14, 22, 24, 26) zur anderen und senkrecht zur Taktrichtung (28) auf die jeweilige Station zu bewegbar ist.

28. Bearbeitungsanlage nach Anspruch 27, dadurch gekennzeichnet, daß eine Vielzahl von Greifern (32 bis 40) auf einem Greiferträger (30) angeordnet ist.

29. Bearbeitungsanlage nach Anspruch 28, dadurch gekennzeichnet, daß der Greiferträger (30) senkrecht zur Taktrichtung (28) oder in Taktrichtung (28) bewegbar ist, so daß die Maschinenteile (66) in den einzelnen Stationen (14, 22, 24, 26) gleichzeitig greifbar, gleichzeitig aus diesen Stationen (14, 22, 24, 26) entnehmbar, gleichzeitig in Taktrichtung (28) weitertransportierbar und gleichzeitig wieder in die nächstfolgende Station (14, 22, 24, 26) einsetzbar sind.

30. Bearbeitungsanlage nach einem der Ansprüche 25 bis 29, dadurch gekennzeichnet, daß eine Weiterbearbeitungsstation (14, 22, 24, 26) eine Haltestation (250) aufweist.

31. Bearbeitungsanlage nach Anspruch 30, dadurch gekennzeichnet, daß die Haltestation (250) eine in das Lagerauge (68) greifende Zentrierung (266) aufweist.

32. Bearbeitungsanlage nach Anspruch 31, dadurch gekennzeichnet, daß die Haltestation (250) eine sich quer zur Einsetzrichtung (272) erstreckende rückwärtige Anschlagfläche (274) für eine der Lagerschalen (104) aufweist.

33. Bearbeitungsanlage nach Anspruch 32, dadurch gekennzeichnet, daß die Haltestation (250) Haltebacken (280) aufweist, mit welchen die an der rückwärtigen Anschlagfläche (274) anliegende Lagerschale (104) gegen diese beaufschlagbar ist.

34. Bearbeitungsanlage nach Anspruch 33, dadurch gekennzeichnet, daß die nicht gegen die rückwärtige Anschlagfläche (274) beaufschlagt angelegte Lagerschale (102) mit geringem Spiel gegen eine Bewegung in Einsetzrichtung (272) und entgegengesetzt dazu geführt ist.

35. Bearbeitungsverfahren nach einem der Ansprüche 1 bis 5 und 18 bis 24, dadurch gekennzeichnet, das Verfahren zum Bruchtrennen eines ein Lagerauge aufweisenden Maschinenteils, insbesondere eines Pleuels in eine erste und eine zweite Lagerschale, so ausgebildet ist, daß das Maschinenteil mit dem Lagerauge auf einem aus zwei Hälften gebildeten Dorn aufgesteckt wird und die Hälften zum Bruchtrennen des Maschinenteils auseinanderbewegt werden und daß vor und während des Bruchtrennens die erste Lagerschale in Trennrichtung durch mindestens ein erstes Querfixierelement festgelegt wird, die erste Lagerschale quer zur Trennrichtung durch zwei erste Seitenfixierelemente festgelegt wird, die zweite Lagerschale quer zur Trennrichtung durch zwei zweite Seitenfixierelemente festgelegt wird und die zweite Lagerschale in Trennrichtung durch mindestens ein zweites Querfixierelement festgelegt wird, wobei alle Fixierelemente zum Aufstecken des Maschinenteils auf den Dorn in einer Aufsteckstellung gehalten und nach dem Aufstecken des Maschinenteils in ihre Fixierstellung bewegt werden.

36. Bearbeitungsverfahren nach Anspruch 35, dadurch gekennzeichnet, daß die ersten und die zweiten Seitenfixierelemente vor dem Bruchtrennen an dem Maschinenteil in Zustellrichtung im wesentlichen spannungsfrei angelegt und in dieser Zustellrichtung im wesentlichen spannungsfrei anliegenden Stellung gegen eine weitere Bewegung entgegengesetzt zur Zustellrichtung während des Bruchtrennens festgehalten werden.

37. Bearbeitungsanlage nach einem der Ansprüche 6 bis 17 und 25 bis 34, dadurch gekennzeichnet, daß die Vorrichtung zum Bruchtrennen des das Lagerauge aufweisenden Maschinenteils, insbesondere eines Pleuels, in eine erste und zweite Lagerschale einen aus zwei Hälften gebildeten Dorn aufweist, auf welchen das Maschinenteil mit dem Lagerauge aufsteckbar ist und dessen Hälften zum Bruchtrennen des Maschinenteils auseinanderbewegbar sind, und ein erstes Querfixierelement zum Festlegen der ersten Lagerschale in Trennrichtung, zwei erste Seitenfixierelemente zum Festlegen der ersten Lagerschale quer zur Trennrichtung, zwei zweite Seitenfixierelemente zum Festlegen der zweiten Lagerschale quer zur Trennrichtung und mindestens ein Querfixierelement zum Festlegen der zweiten Lagerschale in Trennrichtung aufweist, wobei alle Fixierelemente bei auf den Dorn aufgestecktem Maschinenteil auf dieses zur Fixierung zustellbar sind.

38. Bearbeitungsanlage nach Anspruch 37, dadurch gekennzeichnet, daß die ersten und zweiten Seitenfixierelemente (92, 96) vor dem Bruchtrennen an das Maschinenteil (68) durch Verschieben derselben in Zustellrichtung (122) im wesentlichen spannungsfrei in Zustellrichtung (122) anlegbar und in dieser in Zustellrichtung (122) im wesentlichen spannungsfrei anliegenden Stellung gegen eine weitere Bewegung entgegengesetzt zur Zustellrichtung (122) festlegbar sind.
